# EUROPÄISCHE PATENTSCHRIFT

(11) **EP 1 782 527 B1**
(45) Veröffentlichungstag und Bekanntmachung des Hinweises auf die Patenterteilung: **30.09.2009**
(21) Anmeldenummer: 05771483.4
(22) Anmeldetag: 19.08.2005
(51) Int. Cl.: H02M 5/45, H02M 3/158

(54) **VORRICHTUNG ZUR SPEISUNG VON HILFSBETRIEBEEINRICHTUNGEN FÜR EIN KRAFTSTOFFELEKTRISCH ANGETRIEBENES FAHRZEUG**
DEVICE FOR FEEDING AUXILIARY OPERATING DEVICES FOR A FUEL ELECTRIC VEHICLE
DISPOSITIF D'ALIMENTATION DE GROUPES AUXILIAIRES DESTINES A UN VEHICULE PROPULSÉ PAR COMBUSTIBLE OU ÉLECTRICITÉ

(30) Priorität: 26.08.2004 EP 04405532
(43) Veröffentlichungstag der Anmeldung: 09.05.2007
(73) Patentinhaber: ABB Schweiz AG, 5400 Baden (CH)
(72) Erfinder: GUGGISBERG, Beat, CH-5417 Untersiggenthal (CH); BISEN, Vishal, CH-5300 Turgi (CH)
(74) Vertreter: ABB Patent Attorneys
(86) Internationale Anmeldenummer: PCT/CH2005/000486
(87) Internationale Veröffentlichungsnummer: WO 2006/021116

(56) Entgegenhaltungen:
- WO-A1-96/10508
- DE-A1- 4 017 670
- DE-A1- 19 638 620
- DE-A1- 19 848 728
- DE-U- 9 413 638
- DE-U- 20 001 113
- US-A- 6 087 791

## Beschreibung

### Technisches Gebiet

Die Erfindung bezieht sich auf das Gebiet der Hilfsbetriebeeinrichtungen für kraftstoffelektrisch angetriebene Fahrzeuge. Sie geht aus von einer Vorrichtung zur Speisung von Hilfsbetriebeeinrichtungen für ein kraftstoffelektrisch angetriebenes Fahrzeug gemäss dem Oberbegriff der unabhängigen Ansprüche.

### Stand der Technik

Hilfsbetriebeeinrichtungen für kraftstoffelektrisch angetriebene Fahrzeuge werden heute hauptsächlich in diesel-elektrischen Lokomotiven oder grossen diesel-elektrischen Minenfahrzeugen eingesetzt, wobei die Hilfsbetriebeeinrichtungen, als Lüfter, Klimaanlagen, Stellmotoren, Bordnetzumrichter usw. ausgebildet sind. Solche Hilfsbetriebeeinrichtungen werden gängigerweise mittels einer geeigneten Vorrichtung gespeist. Eine solche Vorrichtung zur Speisung von Hilfsbetriebeeinrichtungen für ein kraftstoffelektrisch angetriebenes Fahrzeug ist beispielsweise in der US 6,087,791 und in der DE 200 01 113 U1 angegeben. Darin weist die Vorrichtung eine Brennkraftmaschine, einen von der Brennkraftmaschine angetriebenen Generator und einen wechselspannungsseitig mit dem Generator verbundenen Gleichrichter auf. Der Gleichrichter ist gleichspannungsseitig mit einem ersten und einem zweiten Anschluss eines Gleichspannungskreises verbunden. Weiterhin sind bei der Vorrichtung nach der DE 200 01 113 U1 eine Vielzahl an Wechselrichtern an den ersten und zweiten Anschluss des Gleichspannungskreises angeschlossen, welche Wechselrichter jeweils die entsprechende Hilfsbetriebeeinrichtung, wie beispielsweise Lüfter, Klimaanlage, Stellmotor, Bordnetzumrichter usw., mit elektrischer Energie versorgen. Nach der US 6,087,791 und der DE 200 01 113 U1 ist auch ein Antriebswechselrichter an den ersten und zweiten Anschluss des Gleichspannungskreises angeschlossen, welcher Antriebswechselrichter wechselspannungsseitig einen oder mehrere Fahrmotoren des Fahrzeugs speist.

Selbstverständlich ist es auch denkbar, dass ein zweiter wechselspannungsseitig mit dem Generator verbundener Gleichrichter vorgesehen ist. Der zweite Gleichrichter ist dann gleichspannungsseitig mit einem ersten und einem zweiten Anschluss eines zweiten Gleichspannungskreises verbunden, wobei ein zweiter Antriebswechselrichter an den ersten und zweiten Anschluss des zweiten Gleichspannungskreises angeschlossen ist, welcher zweite Antriebswechselrichter wechselspannungsseitig einen oder mehrere Fahrmotoren des Fahrzeugs speist.

Da der Leistungsbedarf solcher Fahrmotoren sehr gross ist, liegt zwischen dem ersten und zweiten Anschluss des Gleichspannungskreises typischerweise eine Gleichspannung von mehreren Kilovolt an, um die entsprechende Leistung bereitstellen zu können. Problematisch bei der Vorrichtung zur Speisung von Hilfsbetriebeeinrichtungen für ein kraftstoffelektrisch angetriebenes Fahrzeug der US 6,087,791 und der DE 200 01 113 U1 ist dabei, dass die an den ersten und zweiten Anschluss des Gleichspannungskreises angeschlossenen Wechselrichter auf die vorstehend genannte hohe Gleichspannung ausgelegt sein müssen, d.h. dass die Leistungshalbleiterschalter des jeweiligen Wechselrichters eine hohe Sperrfähigkeit und geeignete Schutzeinrichtungen und daran speziell angepasste Betriebsverfahren aufweisen müssen. Der Aufbau der Wechselrichter ist damit sehr kompliziert, störungsanfällig und benötigt entsprechend viel Platz. Weiterhin müssen lsolationsabstände der Zuleitungen und Verschienungen zu den Wechselrichtern und zwischen den Wechselrichtern selbst eingehalten werden, was zusätzlich Platz benötigt. Dieser komplizierte und platzintensive Aufbau der Wechselrichter und der Vorrichtung zur Speisung von Hilfsbetriebeeinrichtungen bewirkt dann auch einen hohen Montage- und Wartungsaufwand. Gerade ein einfacher, kompakter und robuster Aufbau der Vorrichtung zur Speisung von Hilfsbetriebeeinrichtungen ist aber bei einem kraftstoffelektrisch angetriebenen Fahrzeug äusserst wünschenswert.

In der DE 94 13 638 U1 ist weiterhin eine Vorrichtung zur Speisung von Hilfsbetriebeeinrichtungen für ein kraftstoffelektrisch angetriebenes Fahrzeug offenbart, welche Vorrichtung eine erste Brennkraftmaschine und einen von der ersten Brennkraftmaschine angetriebenen ersten Generator aufweist. Wechselspannungsseitig mit dem ersten Generator ist ein dem ersten Generator zugeordneter erster Gleichrichter verbunden, wobei dem ersten Gleichrichter ein erster Tiefsetzsteller nachgeschaltet ist. Dem ersten Tiefsetzsteller ist ein zugeordneter erster Gleichspannungskreis nachgeschaltet, mit welchem ersten Gleichspannungskreis ein erster Wechselrichter zur Speisung von Hilfsbetriebeeinrichtungen verbunden ist. Darüber hinaus weist die Vorrichtung der DE 94 13 638 U1 eine zweite Brennkraftmaschine und einen von der zweiten Brennkraftmaschine angetriebenen zweiten Generator auf. Wechselspannungsseitig mit dem zweiten Generator ist ein dem zweiten Generator zugeordneter zweiter Gleichrichter verbunden, wobei dem zweiten Gleichrichter ein zweiter Tiefsetzsteller nachgeschaltet ist. Dem zweiten Tiefsetzsteller ist ein zugeordneter zweiter Gleichspannungskreis nachgeschaltet, mit welchem zweiten Gleichspannungskreis ein zweiter Wechselrichter zur Speisung von Hilfsbetriebeeinrichtungen verbunden ist.

### Darstellung der Erfindung

Aufgabe der Erfindung ist es deshalb, eine Vorrichtung zur Speisung von Hilfsbetriebeeinrichtungen für ein kraftstoffelektrisch angetriebenes Fahrzeug anzugeben, welche einen geringen Platzbedarf aufweist und zudem robust und störungsunempfindlich ist. Diese Aufgabe wird durch die Merkmale des Anspruchs 1 beziehungsweise des Anspruchs 2 gelöst. In den abhängigen Ansprüchen sind vorteilhafte Weiterbildungen der Erfindung angegeben.

Die erfindungsgemässe Vorrichtung zur Speisung von Hilfsbetriebeeinrichtungen für ein kraftstoffelektrisch angetriebenes Fahrzeug umfasst eine Brennkraftmaschine, einen von der Brennkraftmaschine angetriebenen Generator und einen wechselspannungsseitig mit dem Generator verbundenen und dem Generator zugeordneten Gleichrichter, wobei der Gleichrichter gleichspannungsseitig mit einem ersten und einem zweiten Anschluss eines dem Gleichrichter zugeordneten und dem Gleichrichter nachgeschalteten Gleichspannungskreises verbunden ist. Erfindungsgemäss ist ein erster und ein zweiter Tiefsetzsteller vorgesehen, wobei der erste und zweite Tiefsetzsteller jeweils mit dem ersten und zweiten Anschluss des Gleichspannungskreises verbunden ist und der erste Tiefsetzsteller ferner mit einer dem ersten Tiefsetzsteller zugeordneten und dem ersten Tiefsetzsteller nachgeschalteten ersten Gleichspannungsverschienung zur Speisung erster Hilfsbetriebeeinrichtungen und der zweite Tiefsetzsteller mit einer dem zweiten Tiefsetzsteller zugeordneten und dem zweiten Tiefsetzsteller nachgeschalteten zweiten Gleichspannungsverschienung zur Speisung zweiter Hilfsbetriebeeinrichtungen verbunden ist. An die erste und zweite Gleichspannungsverschienung sind Wechselrichter der jeweiligen Hilfsbetriebeeinrichtungen und/oder Gleichspannungsteller der jeweiligen Hilfsbetriebeinrichtungen zu deren Speisung angeschlossen.

Durch die beiden Tiefsetzsteller kann die Spannung an der jeweils zugehörigen Gleichspannungsverschienung mit Vorteil eingestellt werden. Diese Einstellung erfolgt derart, dass die Spannung an der Gleichspannungsverschienung tiefer ist, als die Spannung zwischen dem ersten und zweiten Anschluss des Gleichspannungskreises. Mittels der im Vergleich zum Gleichspannungskreis niedrigeren Spannung der Gleichspannungsverschienung kann der Isolationsabstand der Gleichspannungsverschienung, d.h. der Verschienungsstränge der jeweiligen Gleichspannungsverschienung, verringert werden, so dass mit Vorteil Platz gespart werden kann und zudem der Montage- und Wartungsaufwand gering gehalten werden kann. Weiterhin ist bei einer Störung oder einem Ausfall eines Tiefsetzstellers eine Speisung der von der Störung oder dem Ausfall nicht betroffenen Gleichspannungsverschienung mittels des zugehörigen Tiefsetzstellers weiter möglich, so dass die zugehörigen Hilfsbetriebeeinrichtungen über ihre Wechselrichter und/oder Gleichspannungsteller weiter gespeist werden können. Die erfindungsgemässe Vorrichtung ist dadurch sehr robust, störungsunempfindlich und zeichnet sich durch eine hohe Verfügbarkeit aus.

Mittels der im Vergleich zum Gleichspannungskreis niedrigeren Spannung der Gleichspannungsverschienung müssen beispielsweise die Wechselrichter und/oder Gleichspannungsteller der Hilfsbetriebeeinrichtungen, d.h. die Leistungshalbleiterschalter der Wechselrichter und/oder Gleichspannungsteller mit zugehörigen Schutzeinrichtungen und Betriebsverfahren, nicht, wie aus dem Stand der Technik bekannt, auf die hohe Spannung des Gleichspannungskreises ausgelegt sein, sondern lediglich auf die niedrigere Spannung der Gleichspannungsverschienung. Vorteilhaft vereinfacht sich dadurch der Aufbau der Wechselrichter und/oder Gleichspannungsteller, die Wechselrichter und/oder Gleichspannungsteller sind störungsunempfindlicher und benötigen entsprechend wenig Platz. Zudem bewirkt der einfache und platzsparende Aufbau der Wechselrichter und/oder Gleichspannungsteller einen geringen Montage- und Wartungsaufwand.

Alternativ zu dem zweiten Tiefsetzsteller ist ein weiterer wechselspannungsseitig mit dem Generator verbundener und dem Generator zugeordneter Gleichrichter vorgesehen, wobei der erste Tiefsetzsteller dann nachwievor mit der dem ersten Tiefsetzsteller zugeordneten und dem ersten Tiefsetzsteller nachgeschalteten ersten Gleichspannungsverschienung zur Speisung erster Hilfsbetriebeeinrichtungen und der weitere Gleichrichter mit der dem weiteren Gleichrichter zugeordneten und dem weiteren Gleichrichter nachgeschalteten zweiten Gleichspannungsverschienung zur Speisung zweiter Hilfsbetriebeeinrichtungen verbunden ist.

Durch den ersten Tiefsetzsteller und den weiteren Gleichrichter kann ebenfalls die Spannung an der jeweils zugehörigen Gleichspannungsverschienung mit Vorteil eingestellt werden, wie dies bei der Lösung mit zwei Tiefsetzstellern bereits erläutert wurde. Mittels der im Vergleich zum Gleichspannungskreis erreichten niedrigeren Spannung der Gleichspannungsverschienung kann der lsolationsabstand der Gleichspannungsverschienung, d.h. der Verschienungsstränge der Gleichspannungsverschienung, verringert werden, so dass mit Vorteil Platz gespart werden kann und zudem der Montage- und Wartungsaufwand gering gehalten werden kann. Weiterhin ist bei einer Störung oder einem Ausfall beispielsweise des ersten Tiefsetzstellers eine Speisung der von der Störung oder dem Ausfall nicht betroffenen zweiten Gleichspannungsverschienung mittels des weiteren Gleichrichters weiter möglich, so dass die zweiten Hilfsbetriebeeinrichtungen über ihre Wechselrichter und/oder Gleichspannungsteller weiter gespeist werden können. Die erfindungsgemässe Vorrichtung ist dadurch sehr robust, störungsunempfindlich und zeichnet sich durch eine hohe Verfügbarkeit aus.

Auch bei der alternativen Lösung mit dem ersten Tiefsetzsteller und dem weiteren Gleichrichter müssen beispielsweise die Wechselrichter und/oder Gleichspannungsteller der Hilfsbetriebeeinrichtungen aufgrund der im Vergleich zum Gleichspannungskreis niedrigeren Spannung der Gleichspannungsverschienung nicht, wie aus dem Stand der Technik bekannt, auf die hohe Spannung des Gleichspannungskreises ausgelegt sein, sondern lediglich auf die niedrigere Spannung der Gleichspannungsverschienung. Vorteilhaft vereinfacht sich dadurch der Aufbau der Wechselrichter und/oder Gleichspannungsteller, die Wechselrichter und/oder Gleichspannungsteller sind störungsunempfindlicher und benötigen entsprechend wenig Platz. Zudem bewirkt der einfache und platzsparende Aufbau der Wechselrichter und/oder Gleichspannungsteller einen geringen Montage- und Wartungsaufwand.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Vorrichtung zur Spei- sung von Hilfsbetriebeeinrichtungen für ein kraftstoffelektrisch angetriebenes Fahrzeug,
- Fig. 2: eine zweite Ausführungsform der efindungsgemässen Vorrichtung,
- Fig. 3: eine dritte Ausführungsform der erfindungsgemässen Vorrichtung,
- Fig. 4: eine vierte Ausführungsform der erfindungsgemässen Vorrichtung,
- Fig. 5: eine fünfte Ausführungsform der erfindungsgemässen Vorrichtung,
- Fig. 6: eine sechste Ausführungsform der erfindungsgemässen Vorrichtung,
- Fig. 7: eine siebte Ausführungsform einer nicht erfindungsgemässen Vorrichtung,
- Fig. 8: eine achte Ausführungsform einer nicht erfindungsgemässen Vorrichtung,
- Fig. 9: eine neunte Ausführungsform einer nicht erfindungsgemässen Vorrichtung und
- Fig. 10: eine zehnte Ausführungsform einer nicht erfindungsgemässen Vorrichtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

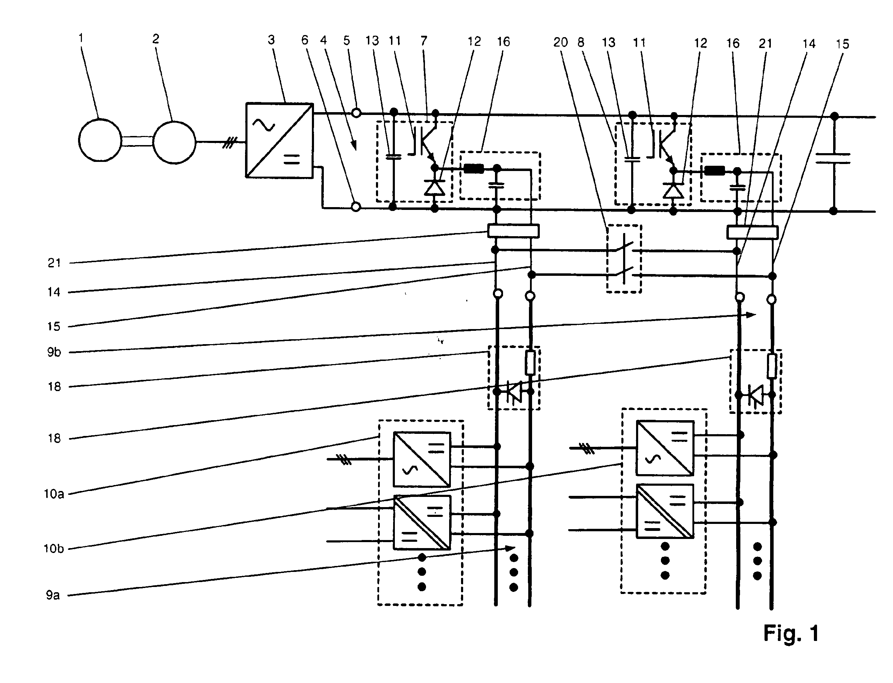

In Fig. 1 ist eine erste Ausführungsform der erfindungsgemässen Vorrichtung zur Speisung von Hilfsbetriebeeinrichtungen für ein kraftstoffelektrisch angetriebenes Fahrzeug gezeigt. Die erfindungsgemässe Vorrichtung nach Fig. 1 umfasst eine Brennkraftmaschine 1, einen von der Brennkraftmaschine 1 angetriebenen Generator 2 und einen wechselspannungsseitig mit dem Generator 2 verbundenen und dem Generator 2 zugeordneten Gleichrichter 3, wobei der Gleichrichter 3 gleichspannungsseitig mit einem ersten und einem zweiten Anschluss 5, 6 eines dem Gleichrichter 3 zugeordneten und dem Gleichrichter 3 nachgeschalteten Gleichspannungskreises 4 verbunden ist. Erfindungsgemäss ist ein erster und ein zweiter Tiefsetzsteller 7, 8 vorgesehen, wobei der erste und zweite Tiefsetzsteller 7, 8 jeweils mit dem ersten und zweiten Anschluss 5, 6 des Gleichspannungskreises 4 verbunden ist. Gemäss Fig. 1 ist insbesondere der erste und zweite Tiefsetzsteller 7, 8 dem Gleichspannungskreis 4 nachgeschaltet. Desweiteren ist der erste Tiefsetzsteller 7 mit einer dem ersten Tiefsetzsteller 7 zugeordneten und dem ersten Tiefsetzsteller 7 nachgeschalteten ersten Gleichspannungsverschienung 9a zur Speisung erster Hilfsbetriebeeinrichtungen 10a und der zweite Tiefsetzsteller 8 mit einer dem zweiten Tiefsetzsteller 8 zugeordneten und dem zweiten Tiefsetzsteller 8 nachgeschalteten zweiten Gleichspannungsverschienung 9b zur Speisung zweiter Hilfsbetriebeeinrichtungen 10b verbunden. Gemäss Fig. 1 weist jede Gleichspannungsverschienung 9a, 9b zwei Verschienungsstränge auf. An die erste Gleichspannungsverschienung 9a sind gemäss Fig. 1 Wechselrichter der ersten Hilfsbetriebeeinrichtungen 10a und/oder Gleichspannungsteller der ersten Hilfsbetriebeinrichtungen 10a und an die zweite Gleichspannungsverschienung 9b sind gemäss Fig. 1 Wechselrichter der zweiten Hilfsbetriebeeinrichtungen 10b und/oder Gleichspannungsteller der zweiten Hilfsbetriebeinrichtungen 10b zu deren Speisung angeschlossen.

Durch die beiden Tiefsetzsteller 7, 8 kann die Spannung an der jeweils zugehörigen Gleichspannungsverschienung 9a, 9b mit Vorteil eingestellt werden. Diese Einstellung erfolgt derart, dass die Spannung an der Gleichspannungsverschienung 9a, 9b tiefer ist, als die Spannung zwischen dem ersten und zweiten Anschluss des 5, 6 Gleichspannungskreises 4. Durch die im Vergleich zum Gleichspannungskreis 4 niedrigeren Spannung der Gleichspannungsverschienung 9a, 9b kann der Isolationsabstand der Verschienungsstränge der jeweiligen Gleichspannungsverschienung 9a, 9b, verringert werden, so dass vorteilhaft Platz gespart werden kann und zudem der Montage- und Wartungsaufwand gering gehalten beziehungsweise minimiert werden kann. Ferner ist bei einer Störung oder einem Ausfall beispielsweise des ersten Tiefsetzstellers 7 eine weitere Speisung der von der Störung oder von dem Ausfall nicht betroffenen zweiten Gleichspannungsverschienung 9b durch den zugehörigen zweiten Tiefsetzsteller 8 möglich, so dass die zweiten Hilfsbetriebeeinrichtungen 10b über ihre Wechselrichter und/oder Gleichspannungsteller weiter gespeist werden können. Die erfindungsgemässe Vorrichtung ist dadurch sehr robust, störungsunempfindlich und zeichnet sich durch eine hohe Verfügbarkeit aus.

Gemäss Fig. 1 ist der jeweilige Tiefsetzsteller 7, 8 durch eine Serienschaltung eines ansteuerbaren Leistungshalbleiterschalters 11 mit einer Diode 12 und durch eine parallel zu der Serienschaltung des ansteuerbaren Leistungshalbleiterschalters 11 mit der Diode 12 geschaltete Kapazität 13 gebildet ist. Gemäss Fig. 1 ist der ansteuerbaren Leistungshalbleiterschalters 11 als Bipolartransistor mit isoliert angeordneter Gateelektrode (IGBT) ausgebildet. Es ist aber auch denkbar, dass der ansteuerbare Leistungshalbleiterschalter als Leistungs-MOSFET, als Abschaltthyristor (GTO - Gate Turn-Off Thyristor) oder als integrierter Thyristor mit kommutierter Ansteuerelektrode (IGCT - Integrated Gate Commutated Thyristor) ausgebildet ist. Nach Fig. 1 ist bei dem jeweiligen Tiefsetzsteller 7, 8 der ansteuerbare Leistungshalbleiterschalter 11 ferner mit dem ersten Anschluss 5 des Gleichspannungskreises 4 und die Diode 12 mit dem zweiten Anschluss 6 des Gleichspannungskreises 4 verbunden. Darüber hinaus ist bei dem jeweiligen Tiefsetzsteller 7, 8 die Diode 12 durch eine erste Verbindung 14 und der Verbindungspunkt der Diode 12 mit dem ansteuerbaren Leistungshalbleiterschalter 11 durch eine zweite Verbindung 15 mit der jeweils zugehörigen Gleichspannungsverschienung 9a, 9b verbunden, d.h. beim ersten Tiefsetzsteller 7 ist die Diode 12 durch die erste Verbindung 14 und der Verbindungspunkt der Diode 12 mit dem ansteuerbaren Leistungshalbleiterschalter 11 durch die zweite Verbindung 15 mit der ersten Gleichspannungsverschienung 9a verbunden und beim zweiten Tiefsetzsteller 8 ist die Diode 12 durch die erste Verbindung 14 und der Verbindungspunkt der Diode 12 mit dem ansteuerbaren Leistungshalbleiterschalter 11 durch die zweite Verbindung 15 mit der zweiten Gleichspannungsverschienung 9b verbunden. Der jeweilige Tiefsetzsteller 7, 8 kommt somit mit einer minimalen Anzahl an Bauelementen aus und ist damit sehr einfach und platzsparend realisierbar. Durch die geringe Anzahl an Bauelementen ist der erste und zweite Tiefsetzsteller 7, 8 besonders robust und störungsunempfindlich und weist demnach eine hohe Verfügbarkeit auf.

Gemäss Fig. 1 ist bei dem jeweiligen Tiefsetzsteller 7, 8, d.h. beim ersten Tiefsetzsteller 7 und beim zweiten Tiefsetzsteller 8, zusätzlich zwischen der ersten Verbindung 14 und der jeweils zugehörigen Gleichspannungsverschienung 9a, 9b und an die zweite Verbindung 15 eine Filterschaltung 16 angeschlossen. Die Filterschaltung 16 bewirkt vorteilhaft, dass durch Schalthandlungen des jeweiligen Tiefsetzstellers 7, 8 erzeugte unerwünschte Spannungsschwingungen und Stromschwingungen ausgefiltert werden, so dass die Spannung der ersten und zweiten Gleichspannungsverschienung 9a 9b, d.h. die zwischen jeweils zugehörigen Verschienungssträngen anliegende Spannung, nahezu eine Gleichspannung ist.

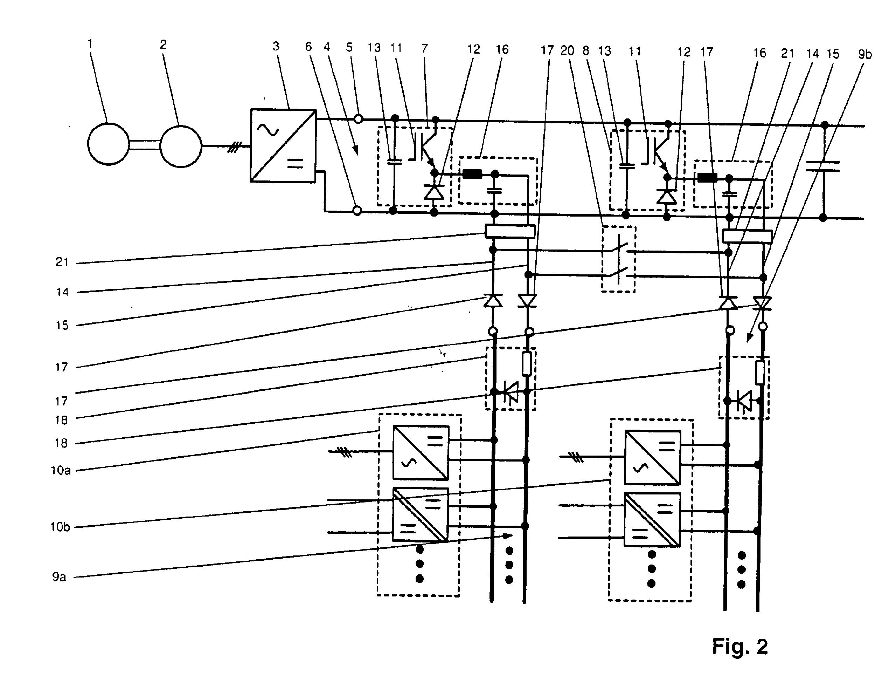

In einer zweiten Ausführungsform der erfindungsgemässen Vorrichtung gemäss Fig. 2 ist im Unterschied zur ersten Ausführungsform nach Fig. 1 bei dem jeweiligen Tiefsetzsteller 7, 8 in die erste Verbindung 14 und in die zweite Verbindung 15 jeweils eine Stromrichtungsbegrenzungselement 17 eingeschaltet. Das jeweilige Stromrichtungsbegrenzungselement 17 dient dazu, dass nur ein Strom in definierter Stromrichtung vom jeweiligen Tiefsetzsteller 7, 8 zur jeweils zugehörigen Gleichspannungsverschienung 9a, 9b und definiert wieder zurück fliesst. Dadurch wird vorteilhaft vermieden, dass ein Fehlerstrom, beispielsweise hervorgerufen durch Fehler der jeweiligen Gleichspannungsverschienung 9a,9b und/oder einen Fehler in einer oder in mehreren Hilfsbetriebeeinrichtungen 10a, 10b, zurück zum jeweiligen Tiefsetzsteller 7, 8 fliessen kann und den jeweilige Tiefsetzsteller 7, 8 beschädigt oder gar zerstört. Das jeweilige Stromrichtungsbegrenzungselement 17 ist gemäss Fig. 2 vorzugsweise als Diode ausgebildet und somit vorteilhaft sehr einfach und platzsparend realisierbar.

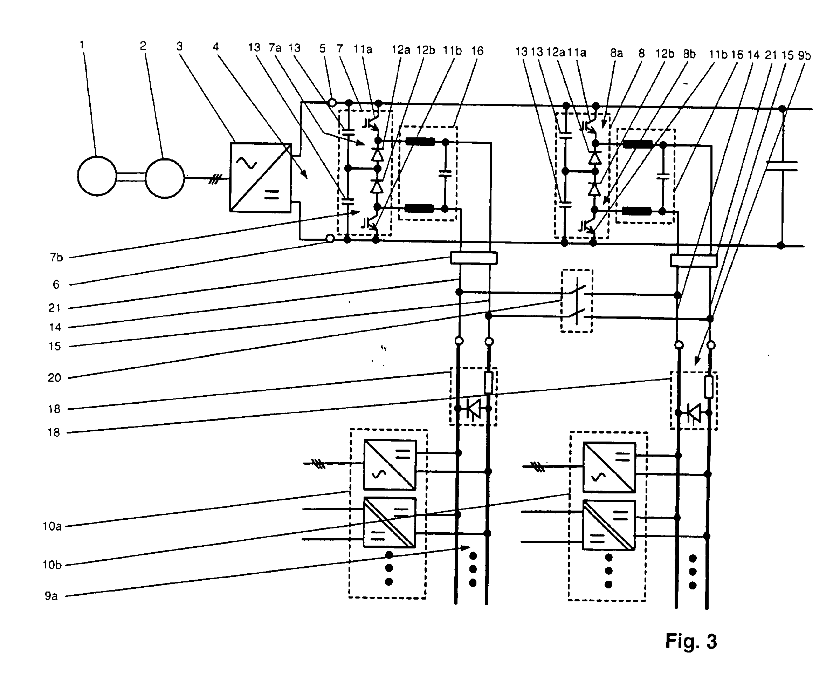

In einer dritten Ausführungsform der erfindungsgemässen Vorrichtung gemäss Fig. 3 ist im Unterschied zur ersten und zweiten Ausführungsform nach Fig. 1 und Fig. 2 der jeweilige Tiefsetzsteller 7, 8 durch eine erste und eine zweite Serienschaltung 7a, 7b, 8a, 8b jeweils eines ansteuerbaren Leistungshalbleiterschalters 11a, 11b mit einer Diode 12a, 12b und durch jeweils eine parallel zu jeder Serienschaltung geschaltete Kapazität 13 gebildet, wobei bei dem jeweiligen Tiefsetzsteller 7, 8 die Diode 12a der ersten Serienschaltung 7a, 8a mit der Diode 12b der zweiten Serienschaltung 7b, 8b verbunden ist. Gemäss Fig. 3 ist der ansteuerbaren Leistungshalbleiterschalters 11a, 11b als Bipolartransistor mit isoliert angeordneter Gateelektrode (IGBT) ausgebildet. Es ist aber auch denkbar, dass der ansteuerbare Leistungshalbleiterschalter als Leistungs-MOSFET, als Abschaltthyristor (GTO - Gate Turn-Off Thyristor) oder als integrierter Thyristor mit kommutierter Ansteuerelektrode (IGCT - Integrated Gate Commutated Thyristor) ausgebildet ist. Nach Fig. 3 ist bei dem jeweiligen Tiefsetzsteller 7, 8 der ansteuerbare Leistungshalbleiterschalter 11a der ersten Serienschaltung 7a, 8a mit dem ersten Anschluss 5 des Gleichspannungskreises 4 und der ansteuerbare Leistungshalbleiterschalter 11b der zweiten Serienschaltung 7b, 8b mit dem zweiten Anschluss 6 des Gleichspannungskreises 4 verbunden. Weiterhin ist bei dem jeweiligen Tiefsetzsteller 7, 8 der Verbindungspunkt der Diode 12a der ersten Serienschaltung 7a, 8a mit dem ansteuerbaren Leistungshalbleiterschalter 11a der ersten Serienschaltung 7a, 8a durch eine erste Verbindung 14 mit der jeweils zugehörigen Gleichspannungsverschienung 9a, 9b verbunden, d.h. beim ersten Tiefsetzsteller 7 ist der Verbindungspunkt der Diode 12a der ersten Serienschaltung 7a mit dem ansteuerbaren Leistungshalbleiterschalter 11a der ersten Serienschaltung 7a durch die erste Verbindung 14 mit der ersten Gleichspannungsverschienung 9a verbunden und beim zweiten Tiefsetzsteller 8 ist der Verbindungspunkt der Diode 12a der ersten Serienschaltung 8a mit dem ansteuerbaren Leistungshalbleiterschalter 11a der ersten Serienschaltung 8a durch die erste Verbindung 14 mit der zweiten Gleichspannungsverschienung 9b verbunden. Darüber hinaus ist bei dem jeweiligen Tiefsetzsteller 7, 8 der Verbindungspunkt der Diode 12b der zweiten Serienschaltung 7b, 8b mit dem ansteuerbaren Leistungshalbleiterschalter 11b der zweiten Serienschaltung 7b, 8b durch eine zweite Verbindung 15 mit der jeweils zugehörigen Gleichspannungsverschienung 9a, 9b verbunden, d.h. beim ersten Tiefsetzsteller 7 ist der Verbindungspunkt der Diode 12b der zweiten Serienschaltung 7b mit dem ansteuerbaren Leistungshalbleiterschalter 11b der zweiten Serienschaltung 7b durch eine zweite Verbindung 15 mit der ersten Gleichspannungsverschienung 9a verbunden und beim zweiten Tiefsetzsteller 8 ist der Verbindungspunkt der Diode 12b der zweiten Serienschaltung 8b mit dem ansteuerbaren Leistungshalbleiterschalter 11b der zweiten Serienschaltung 8b durch eine zweite Verbindung 15 mit der zweiten Gleichspannungsverschienung 9b verbunden. Durch die vorstehend beschriebene Ausführung des ersten und zweiten Tiefsetzstellers 7, 8 kann eine höhere Spannung des Gleichspannungskreises 4 im Vergleich zu der Ausführungsform des ersten und zweiten Tiefsetzstellers 7, 8 nach Fig. 1 und Fig. 2 geschaltet werden, da sich diese Spannung auf die zwei Kapazitäten 13 des jeweiligen Tiefsetzstellers 7, 8 aufteilt. Wird hingegen eine vergleichbare Spannung des Gleichspannungskreises 4 wie bei der Ausführungsform des ersten und zweiten Tiefsetzstellers 7, 8 nach Fig. 1 und Fig. 2 gewählt, so können aufgrund der Aufteilung dieser Spannung auf die zwei Kapazitäten 13 des jeweiligen Tiefsetzstellers 7, 8 für die zugehörigen ansteuerbaren Leistungshalbleiterschalter 11a, 11b und Dioden 12a, 12b preisgünstige Niederspannungshalbleiter verwendet werden, welche mit einer hohen Schaltfrequenz betreibbar sind. Derart ausgebildete Tiefsetzsteller 7, 8 erzeugen vorteilhaft weniger unerwünschte Spannungsschwingungen und Stromschwingungen und verursachen damit weniger EMV-Probleme. Weiterhin weisen derart ausgebildete Tiefsetzsteller 7, 8 nur minimale Leit- und Schaltverluste auf, so dass sich die Tiefsetzsteller .7, 8 besonders effizient betreiben lassen. Der jeweiligen Tiefsetzsteller 7, 8 gemäss Fig. 3 kommt zudem mit einer minimalen Anzahl an Bauelementen aus und ist damit sehr einfach und platzsparend realisierbar. Durch die geringe Anzahl an Bauelementen ist der erste und zweite Tiefsetzsteller 7, 8 besonders robust und störungsunempfindlich und weist demnach eine hohe Verfügbarkeit auf.

Gemäss Fig. 3 ist bei dem jeweiligen Tiefsetzsteller 7, 8 zwischen der ersten Verbindung 14 und der jeweils zugehörigen Gleichspannungsverschienung 9a, 9b und zwischen der zweiten Verbindung 15 und der jeweils zugehörigen Gleichspannungsverschienung 9a, 9b eine Filterschaltung 16 angeschlossen. Die Filterschaltung 16 bewirkt vorteilhaft, dass durch Schalthandlungen des jeweiligen Tiefsetzstellers 7, 8 erzeugte unerwünschte Spannungsschwingungen und Stromschwingungen ausgefiltert werden, so dass die Spannung der ersten und zweiten Gleichspannungsverschienung 9a, 9b, d.h. die zwischen den Verschienungssträngen der ersten und zweiten Gleichspannungsverschienung 9a, 9b anliegende Spannung, nahezu eine Gleichspannung ist.

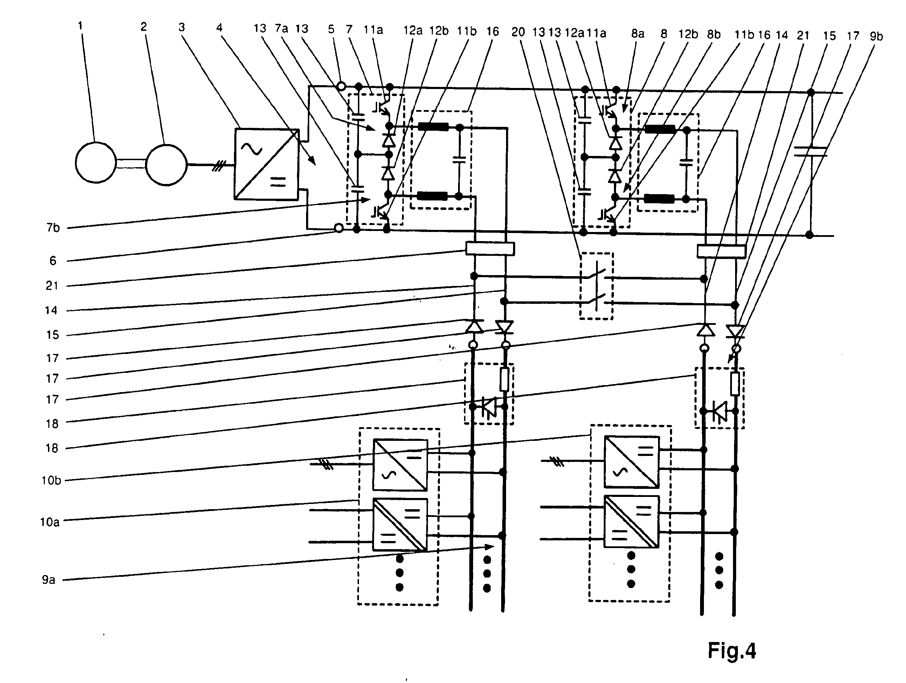

In einer vierten Ausführungsform der erfindungsgemässen Vorrichtung gemäss Fig. 4 ist im Unterschied zur dritten Ausführungsform nach Fig. 3 bei dem jeweiligen Tiefsetzsteller 7, 8 in die erste Verbindung 14 und in die zweite Verbindung 15 jeweils ein Stromrichtungsbegrenzungselement 17 eingeschaltet. Das jeweilige Stromrichtungsbegrenzungselement 17 dient dazu, dass nur ein Strom in definierter Stromrichtung vom jeweiligen Tiefsetzsteller 7, 8 zur zugehörigen Gleichspannungsverschienung 9a, 9b und definiert wieder zurück fliesst. Dadurch wird vorteilhaft vermieden, dass ein Fehlerstrom, beispielsweise hervorgerufen durch einen Fehler der jeweiligen Gleichspannungsverschienung 9a, 9b und/oder einen Fehler in einer oder in mehreren Hilfsbetriebeeinrichtungen 10a, 10b, zurück zum jeweiligen Tiefsetzsteller 7, 8 fliessen kann und den jeweilige Tiefsetzsteller 7, 8 beschädigt oder gar zerstört. Das jeweilige Stromrichtungsbegrenzungselement 17 ist gemäss Fig. 4 vorzugsweise als Diode ausgebildet und somit vorteilhaft sehr einfach und platzsparend realisierbar.

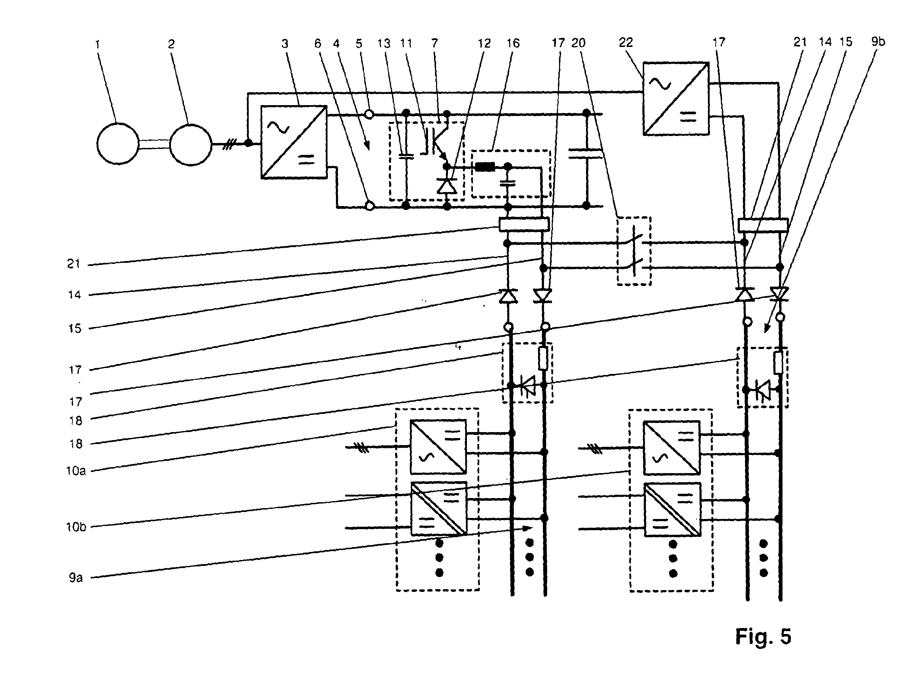

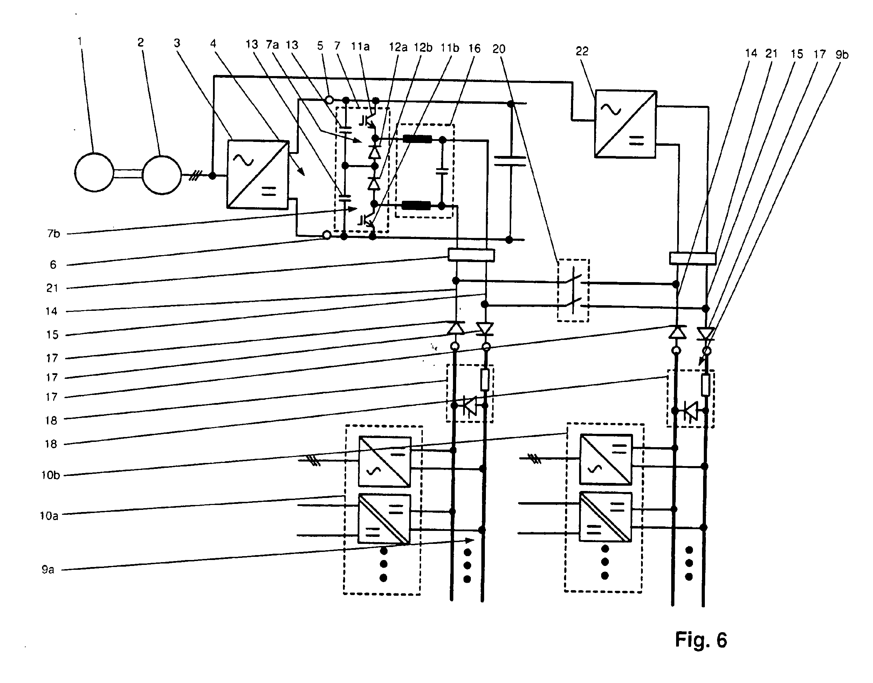

In einer fünften und sechsten Ausführungsform der erfindungsgemässen Vorrichtung nach Fig. 5 und Fig. 6 ist alternativ zur ersten, zweiten, dritten und vierten Ausführungsform gemäss Fig. 1, Fig. 2, Fig. 3 und Fig. 4 anstelle des zweiten Tiefsetzstellers 8 ein weiterer wechselspannungsseitig mit dem Generator 2 verbundener und dem Generator 2 zugeordneter Gleichrichter 22 vorgesehen, wobei der erste Tiefsetzsteller 7 mit der dem ersten Tiefsetzsteller 7 zugeordneten und dem ersten Tiefsetzsteller 7 nachgeschalteten ersten Gleichspannungsverschienung 9a zur Speisung erster Hilfsbetriebeeinrichtungen 10a verbunden ist und der weitere Gleichrichter 22 mit der dem weiteren Gleichrichter 22 zugeordneten und dem weiteren Gleichrichter 22 nachgeschalteten zweiten Gleichspannungsverschienung 9b zur Speisung zweiter Hilfsbetriebeeinrichtungen 10b verbunden ist. Gemäss Fig. 5 und Fig. 6 ist der erste Tiefsetzsteller 7 insbesondere dem Gleichspannungskreis 4 nachgeschaltet. Gemäss Fig. 5 und Fig. 6 ist der weitere Gleichrichter 22 durch eine erste Verbindung 14 und durch eine zweite Verbindung 15 mit der zweiten Gleichspannungsverschienung 9a verbunden. Weiterhin ist der erste Tiefsetzsetzsteller 7 nach Fig. 5 entsprechend dem ersten Tiefsetzsteller nach Fig. 1 und Fig. 2 ausgeführt und verbunden beziehungsweise verschaltet und weist die bereits erwähnten Vorteile auf. Darüber hinaus ist der erste Tiefsetzsetzsteller 7 nach Fig. 6 entsprechend dem ersten Tiefsetzsteller nach Fig. 3 und Fig. 4 ausgebildet und verbunden beziehungsweise verschaltet und weist ebenfalls die bereits erwähnten Vorteile auf.

Durch den ersten Tiefsetzsteller 7 und dem weiteren Gleichrichter 22 kann die Spannung an der jeweils zugehörigen Gleichspannungsverschienung 9a, 9b mit Vorteil eingestellt werden. Diese Einstellung erfolgt derart, dass die Spannung an der Gleichspannungsverschienung 9a, 9b tiefer ist, als die Spannung zwischen dem ersten und zweiten Anschluss des 5, 6 Gleichspannungskreises 4. Durch die im Vergleich zum Gleichspannungskreis 4 niedrigeren Spannung der Gleichspannungsverschienung 9a, 9b kann der Isolationsabstand der Verschienungsstränge der Gleichspannungsverschienung 9a, 9b, verringert werden, so dass vorteilhaft Platz gespart werden kann und zudem der Montage- und Wartungsaufwand gering gehalten beziehungsweise minimiert werden kann. Ferner ist bei einer Störung oder einem Ausfall beispielsweise des ersten Tiefsetzstellers 7 eine weitere Speisung der von der Störung oder von dem Ausfall nicht betroffenen zweiten Gleichspannungsverschienung 9b durch den weiteren Gleichrichter 22 möglich, so dass die zweiten Hilfsbetriebeeinrichtungen 10b über ihre Wechselrichter und/oder Gleichspannungsteller weiter gespeist werden können. Die erfindungsgemässe Vorrichtung ist dadurch sehr robust, störungsunempfindlich und zeichnet sich durch eine hohe Verfügbarkeit aus.

Gemäss Fig. 5 und Fig. 6 ist bei dem weiteren Gleichrichter 22, wie auch beim ersten Tiefsetzsteller 7, in die erste Verbindung 14 und in die zweite Verbindung 15 jeweils ein Stromrichtungsbegrenzungselement 17 eingeschaltet. Das jeweilige Stromrichtungsbegrenzungselement 17 dient dazu, dass nur ein Strom in definierter Stromrichtung vom jeweiligen Tiefsetzsteller 7, 8 zur zugehörigen Gleichspannungsverschienung 9a, 9b und definiert wieder zurück fliesst. Dadurch wird vorteilhaft vermieden, dass ein Fehlerstrom, beispielsweise hervorgerufen durch einen Fehler der jeweiligen Gleichspannungsverschienung 9a, 9b und/oder einen Fehler in einer oder in mehreren Hilfsbetriebeeinrichtungen 10a, 10b, zurück zum ersten Tiefsetzsteller 7 beziehungsweise zum weiteren Gleichrichter 22 fliessen kann und den ersten Tiefsetzsteller 7 beziehungsweise den weiteren Gleichrichter 22 beschädigt oder gar zerstört. Das jeweilige Stromrichtungsbegrenzungselement 17 ist gemäss Fig. 5 und Fig. 6 vorzugsweise als Diode ausgebildet und somit vorteilhaft sehr einfach und platzsparend realisierbar.

Zur Abtrennung des, wie vorstehend erwähnt, gestörten oder ausgefallenen ersten Tiefsetzstellers 7 oder des weiteren Gleichrichters 22 ist gemäss Fig. 5 und Fig. 6 beim dem weiteren Gleichrichter 22, wie auch beim ersten Tiefsetzsteller 7, in die erste und zweite Verbindung 14, 15 ein Trennelement 21 eingeschaltet. Dadurch wird vorteilhaft sichergestellt, dass der gestörte oder ausgefallene erste Tiefsetzsteller 7 oder weitere Gleichrichter 21 2 die zugehörige erste und zweite Verbindung 14, 15 beispielsweise nicht kurzschliesst. Das Trennelement 21 ist vorzugsweise als niederinduktiver Schalter, beispielsweise als mechanischer oder als ansteuerbarer Leistungshalbleiterschalter, oder als Sicherung ausgeführt.

Bei sämtlichen Ausführungsformen der erfindungsgemässen Vorrichtung nach Fig. 1 bis Fig. 6 weist die erste und die zweite Gleichspannungsverschienung 9a, 9b jeweils ein Überspannungsbegrenzungsnetzwerk 18 auf. Das Überspannungsbegrenzungsnetzwerk 18 ist durch einen Widerstand und einen ansteuerbaren Schalter, vorzugsweise ein ansteuerbarer Leistungshalbleiterschalter gebildet, wobei das Überspannungsbegrenzungsnetzwerk 18 durch Schliessen des Schalters bei einer auftretenden Überspannung der Spannung der jeweiligen Gleichspannungsverschienung 9a, 9b betätigt wird. Vorteilhaft wird bei der Betätigung des Schalters Energie der jeweiligen Gleichspannungsverschienung 9a, 9b in Wärme im Widerstand umgesetzt und somit die Spannung der Gleichspannungsverschienung 9a, 9b einfach, schnell und effektiv verringert. Vorzugsweise erfolgt die Betätigung des Überspannungsbegrenzungsnetzwerks 18 für eine vorgegebene Zeitdauer. Diese Zeitdauer wird vorzugsweise in Abhängigkeit der thermischen Kapazität des Widerstandes vorgegeben. Die Betätigung erfolgt nach für den Fachmann bekannten Kriterien, auf die an dieser Stelle nicht näher eingegangen wird.

Darüber hinaus ist bei sämtlichen Ausführungsformen der erfindungsgemässen Vorrichtung nach Fig. 1 bis Fig. 6 ein Verbindungselement 20 zwischen der ersten Verbindung 14 bezüglich der ersten Gleichspannungsverschienung 9a und der ersten Verbindung 14 bezüglich der zweiten Gleichspannungsverschienung 9b und zwischen der zweiten Verbindung 15 bezüglich der ersten Gleichspannungsverschienung 9a und der zweiten Verbindung 15 bezüglich der zweiten Gleichspannungsverschienung 9b eingeschaltet. Im Normalbetrieb der erfindungsgemässen Vorrichtung ist das Verbindungselement 20 offen, d.h. die erste Verbindung 14 bezüglich der ersten Gleichspannungsverschienung 9a und die erste Verbindung 14 bezüglich der zweiten Gleichspannungsverschienung 9b sind nicht miteinander verbunden und die zweite Verbindung 15 bezüglich der ersten Gleichspannungsverschienung 9a und die zweite Verbindung 15 bezüglich der zweiten Gleichspannungsverschienung 9b sind ebenfalls nicht miteinander verbunden. Bei einer Störung oder einem Ausfall beispielsweise des ersten Tiefsetzstellers 7 wird das Verbindungselement 20 geschlossen, d.h. die erste Verbindung 14 bezüglich der ersten Gleichspannungsverschienung 9a und die erste Verbindung 14 bezüglich der zweiten Gleichspannungsverschienung 9b sind dann miteinander verbunden und die zweite Verbindung 15 bezüglich der ersten Gleichspannungsverschienung 9a und die zweite Verbindung 15 bezüglich der zweiten Gleichspannungsverschienung 9b sind dann auch miteinander verbunden. Die Speisung der ersten Gleichspannungsverschienung 9a erfolgt somit vorteilhaft über den zweiten Tiefsetzsteller 8 beziehungsweise über den weiteren Gleichrichter 22, so dass die ersten Hilfsbetriebeeinrichtungen 10 über ihre Wechselrichter und/oder Gleichspannungsteller weiter gespeist werden können. Eine solche mögliche redundante Speisung der jeweiligen Gleichspannungsverschienung 9a, 9b bewirkt eine weitere Verbesserung der Robustheit und Störungsunempfindlichkeit, wobei zudem die Verfügbarkeit weiter erhöht werden kann. Das Verbindungselement 20 ist vorzugsweise als niederinduktiver Schalter, beispielsweise als mechanischer oder als ansteuerbarer Leistungshalbleiterschalter, ausgeführt. Zur Abtrennung des gestörten oder ausgefallenen Tiefsetzstellers 7, 8 ist bei den Ausführungsformen der erfindungsgemässen Vorrichtung nach Fig. 1 bis Fig. 4 bei dem jeweiligen Tiefsetzsteller 7, 8 in die erste und zweite Verbindung 14, 15 ein Trennelement 21 eingeschaltet ist. Dadurch wird vorteilhaft sichergestellt, dass der gestörte oder ausgefallene Tiefsetzsteller 7, 8 die zugehörige erste und zweite Verbindung 14, 15 beispielsweise nicht kurzschliesst. Das Trennelement 21 ist vorzugsweise als niederinduktiver Schalter, beispielsweise als mechanischer oder als ansteuerbarer Leistungshalbleiterschalter, oder als Sicherung ausgeführt.

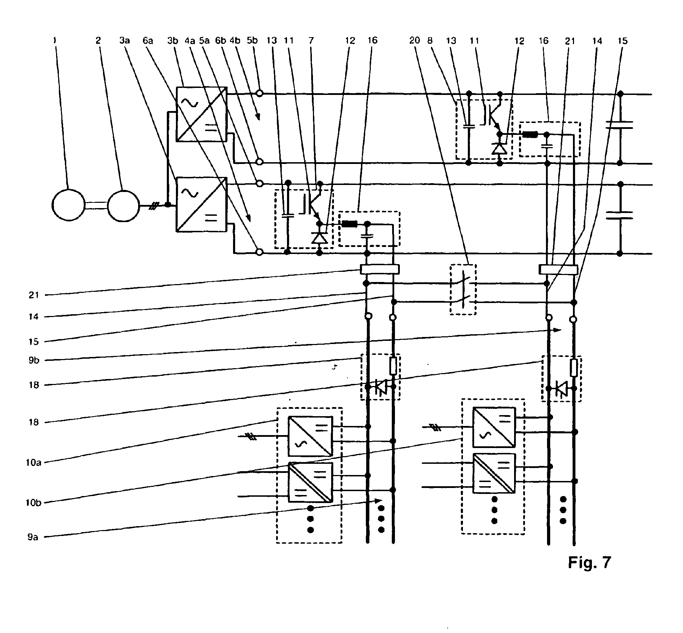

In einer siebten, achten, neunten und zehnten Ausführungsform der Vorrichtung nach Fig. 7, Fig. 8, Fig. 9 und Fig. 10 sind alternativ zur ersten, zweiten, dritten vierten, fünften und sechsten Ausführungsform gemäss Fig. 1, Fig. 2, Fig. 3, Fig. 4, Fig. 5 und Fig. 6 anstelle eines einzigen mit dem Generator 2 wechselspannungsseitig verbundenen Gleichrichters 3 nun dem Generator 2 zugeordnete erste und zweite Gleichrichter 3a, 3b wechselspannungsseitig mit dem Generator 2 verbunden, wobei der erste Gleichrichter 3a gleichspannungsseitig mit einem ersten und einem zweiten Anschluss 5a, 6a eines dem ersten Gleichrichter 3a zugeordneten und dem ersten Gleichrichter 3a nachgeschalteten ersten Gleichspannungskreises 4a und der zweite Gleichrichter 3b gleichspannungsseitig mit einem ersten und einem zweiten Anschluss 5b, 6b eines dem zweiten Gleichrichter 3b zugeordneten und dem zweiten Gleichrichter 3b nachgeschalteten zweiten Gleichspannungskreises 4b verbunden ist. Es ist ferner ein erster und ein zweiter Tiefsetzsteller 7, 8 vorgesehen, wobei der erste Tiefsetzsteller 7 mit dem ersten und zweiten Anschluss 5a, 6a des ersten Gleichspannungskreises 4a und der zweite Tiefsetzsteller 8 mit dem ersten und zweiten Anschluss 5b, 6b des zweiten Gleichspannungskreises 4b verbunden ist. Desweiteren ist der erste Tiefsetzsteller 7 mit einer dem ersten Tiefsetzsteller 7 zugeordneten und dem ersten Tiefsetzsteller 7 nachgeschalteten ersten Gleichspannungsverschienung 9a zur Speisung erster Hilfsbetriebeeinrichtungen 10a und der zweite Tiefsetzsteller 8 mit einer dem zweiten Tiefsetzsteller 8 zugeordneten und dem zweiten Tiefsetzsteller 8 nachgeschalteten zweiten Gleichspannungsverschienung 9b zur Speisung zweiter Hilfsbetriebeeinrichtungen 10b verbunden. Gemäss Fig. 7 bis Fig. 10 ist der erste Tiefsetzsteller 7 insbesondere dem ersten Gleichspannungskreis 4a nachgeschaltet und der zweite Tiefsetzsteller 8 insbesondere dem zweiten Gleichspannungskreis 4b nachgeschaltet.

Gemäss Fig. 7, Fig. 8, Fig. 9 und Fig. 10 weist jede Gleichspannungsverschienung 9a, 9b zwei Verschienungsstränge auf. An die erste Gleichspannungsverschienung 9a sind gemäss Fig. 7, Fig. 8, Fig. 9 und Fig. 10 Wechselrichter der ersten Hilfsbetriebeeinrichtungen 10a und/oder Gleichspannungsteller der ersten Hilfsbetriebeinrichtungen 10a und an die zweite Gleichspannungsverschienung 9b sind gemäss Fig. 7, Fig. 8, Fig. 9 und Fig. 10 Wechselrichter der zweiten Hilfsbetriebeeinrichtungen 10b und/oder Gleichspannungsteller der zweiten Hilfsbetriebeinrichtungen 10b zu deren Speisung angeschlossen.

Durch die beiden Tiefsetzsteller 7, 8 gemäss Fig. 7, Fig. 8, Fig. 9 und Fig. 10 kann die Spannung an der jeweils zugehörigen Gleichspannungsverschienung 9a, 9b mit Vorteil eingestellt werden. Diese Einstellung erfolgt derart, dass die Spannung an der Gleichspannungsverschienung 9a, 9b tiefer ist, als die Spannung zwischen dem ersten und zweiten Anschluss 5a, 5b, 6a, 6b des jeweiligen Gleichspannungskreises 4a, 4b. Durch die im Vergleich zum jeweiligen Gleichspannungskreis 4a, 4b niedrigeren Spannung der Gleichspannungsverschienung 9a, 9b kann der Isolationsabstand der Verschienungsstränge der jeweiligen Gleichspannungsverschienung 9a, 9b, verringert werden, so dass vorteilhaft Platz gespart werden kann und zudem der Montage- und Wartungsaufwand gering gehalten beziehungsweise minimiert werden kann. Ferner ist bei einer Störung oder einem Ausfall beispielsweise des ersten Tiefsetzstellers 7 eine weitere Speisung der von der Störung oder von dem Ausfall nicht betroffenen zweiten Gleichspannungsverschienung 9b durch den zugehörigen zweiten Tiefsetzsteller 8 möglich, so dass die zweiten Hilfsbetriebeeinrichtungen 10b über ihre Wechselrichter und/oder Gleichspannungsteller weiter gespeist werden können. Die Vorrichtung ist dadurch sehr robust, störungsunempfindlich und zeichnet sich durch eine hohe Verfügbarkeit aus.

Gemäss Fig. 7, Fig. 8, Fig. 9 und Fig. 10 ist der jeweilige Tiefsetzsteller 7, 8 durch eine Serienschaltung eines ansteuerbaren Leistungshalbleiterschalters 11 mit einer Diode 12 und durch eine parallel zu der Serienschaltung des ansteuerbaren Leistungshalbleiterschalters 11 mit der Diode 12 geschaltete Kapazität 13 gebildet ist. Gemäss Fig. 7, Fig. 8, Fig. 9 und Fig. 10 ist der ansteuerbaren Leistungshalbleiterschalters 11 als Bipolartransistor mit isoliert angeordneter Gateelektrode (IGBT) ausgebildet. Es ist aber auch denkbar, dass der ansteuerbare Leistungshalbleiterschalter als Leistungs-MOSFET, als Abschaltthyristor (GTO - Gate Turn-Off Thyristor) oder als integrierter Thyristor mit kommutierter Ansteuerelektrode (IGCT - Integrated Gate Commutated Thyristor) ausgebildet ist. Nach Fig. 7, Fig. 8, Fig. 9 und Fig. 10 ist bei dem jeweiligen Tiefsetzsteller 7, 8 der ansteuerbare Leistungshalbleiterschalter 11 ferner mit dem ersten Anschluss 5a, 5b des zugehörigen Gleichspannungskreises 4a, 4b und die Diode 12 mit dem zweiten Anschluss 6a, 6b des zugehörigen Gleichspannungskreises 4a, 4b verbunden. Darüber hinaus ist bei dem jeweiligen Tiefsetzsteller 7, 8 die Diode 12 durch eine erste Verbindung 14 und der Verbindungspunkt der Diode 12 mit dem ansteuerbaren Leistungshalbleiterschalter 11 durch eine zweite Verbindung 15 mit der jeweils zugehörigen Gleichspannungsverschienung 9a, 9b verbunden, d.h. beim ersten Tiefsetzsteller 7 ist die Diode 12 durch die erste Verbindung 14 und der Verbindungspunkt der Diode 12 mit dem ansteuerbaren Leistungshalbleiterschalter 11 durch die zweite Verbindung 15 mit der ersten Gleichspannungsverschienung 9a verbunden und beim zweiten Tiefsetzsteller 8 ist die Diode 12 durch die erste Verbindung 14 und der Verbindungspunkt der Diode 12 mit dem ansteuerbaren Leistungshalbleiterschalter 11 durch die zweite Verbindung 15 mit der zweiten Gleichspannungsverschienung 9b verbunden. Der jeweilige Tiefsetzsteller 7, 8 kommt somit mit einer minimalen Anzahl an Bauelementen aus und ist damit sehr einfach und platzsparend realisierbar. Durch die geringe Anzahl an Bauelementen ist der erste und zweite Tiefsetzsteller 7, 8 besonders robust und störungsunempfindlich und weist demnach eine hohe Verfügbarkeit auf.

Gemäss Fig. 7, Fig. 8, Fig. 9 und Fig. 10 ist bei dem jeweiligen Tiefsetzsteller 7, 8, d.h. beim ersten Tiefsetzsteller 7 und beim zweiten Tiefsetzsteller 8, zusätzlich zwischen der ersten Verbindung 14 und der jeweils zugehörigen Gleichspannungsverschienung 9a, 9b und an die zweite Verbindung 15 eine Filterschaltung 16 angeschlossen. Die Filterschaltung 16 bewirkt vorteilhaft, dass durch Schalthandlungen des jeweiligen Tiefsetzstellers 7, 8 erzeugte unerwünschte Spannungsschwingungen und Stromschwingungen ausgefiltert werden, so dass die Spannung der ersten und zweiten Gleichspannungsverschienung 9a 9b, d.h. die zwischen jeweils zugehörigen Verschienungssträngen anliegende Spannung, nahezu eine Gleichspannung ist.

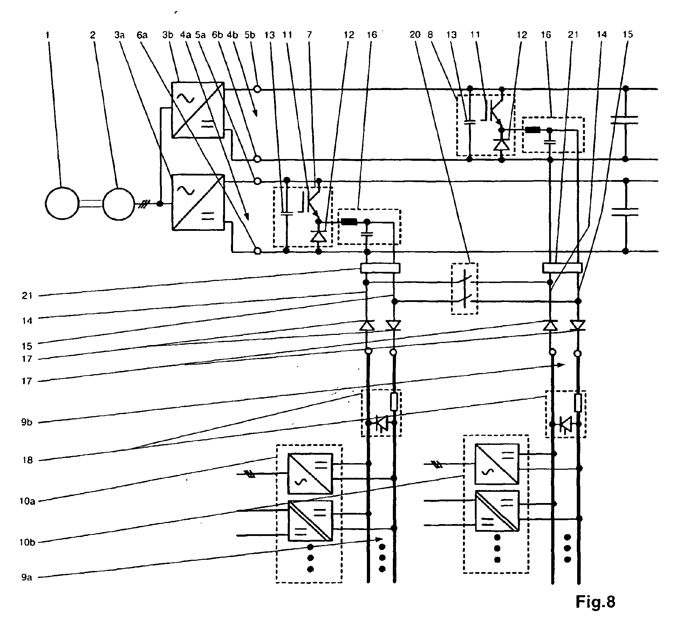

In einer achten Ausführungsform der Vorrichtung gemäss Fig. 8 ist im Unterschied zur siebten Ausführungsform nach Fig. 7 bei dem jeweiligen Tiefsetzsteller 7, 8 in die erste Verbindung 14 und in die zweite Verbindung 15 jeweils eine Stromrichtungsbegrenzungselement 17 eingeschaltet. Das jeweilige Stromrichtungsbegrenzungselement 17 dient dazu, dass nur ein Strom in definierter Stromrichtung vom jeweiligen Tiefsetzsteller 7, 8 zur jeweils zugehörigen Gleichspannungsverschienung 9a, 9b und definiert wieder zurück fliesst. Dadurch wird vorteilhaft vermieden, dass ein Fehlerstrom, beispielsweise hervorgerufen durch Fehler der jeweiligen Gleichspannungsverschienung 9a,9b und/oder einen Fehler in einer oder in mehreren Hilfsbetriebeeinrichtungen 10a, 10b, zurück zum jeweiligen Tiefsetzsteller 7, 8 fliessen kann und den jeweilige Tiefsetzsteller 7, 8 beschädigt oder gar zerstört. Das jeweilige Stromrichtungsbegrenzungselement 17 ist gemäss Fig. 8 vorzugsweise als Diode ausgebildet und somit vorteilhaft sehr einfach und platzsparend realisierbar.

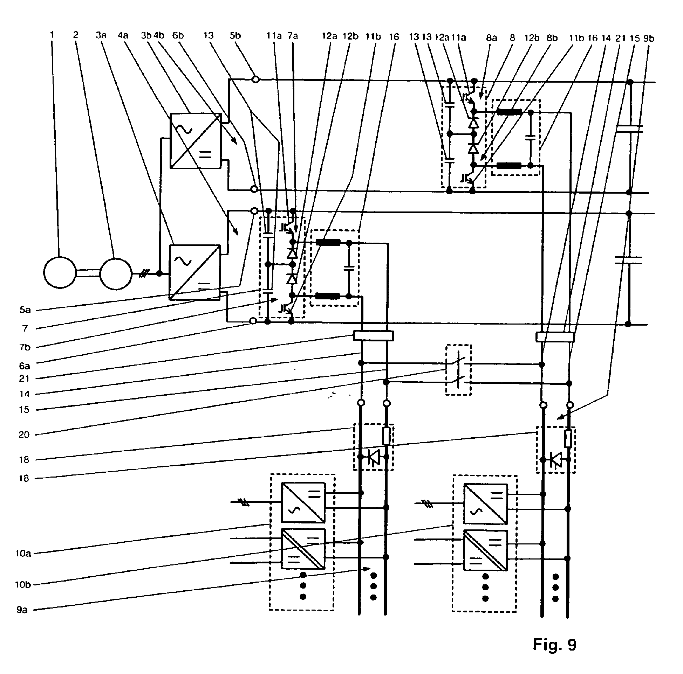

In einer neunten Ausführungsform der Vorrichtung gemäss Fig. 9 ist im Unterschied zur siebten und achten Ausführungsform nach Fig. 7 und Fig. 8 der jeweilige Tiefsetzsteller 7, 8 durch eine erste und eine zweite Serienschaltung 7a, 7b, 8a, 8b jeweils eines ansteuerbaren Leistungshalbleiterschalters 11a, 11b mit einer Diode 12a, 12b und durch jeweils eine parallel zu jeder Serienschaltung geschaltete Kapazität 13 gebildet, wobei bei dem jeweiligen Tiefsetzsteller 7, 8 die Diode 12a der ersten Serienschaltung 7a, 8a mit der Diode 12b der zweiten Serienschaltung 7b, 8b verbunden ist. Gemäss Fig. 9 ist der ansteuerbaren Leistungshalbleiterschalters 11a, 11b als Bipolartransistor mit isoliert angeordneter Gateelektrode (IGBT) ausgebildet. Es ist aber auch denkbar, dass der ansteuerbare Leistungshalbleiterschalter als Leistungs-MOSFET, als Abschaltthyristor (GTO - Gate Turn-Off Thyristor) oder als integrierter Thyristor mit kommutierter Ansteuerelektrode (IGCT - Integrated Gate Commutated Thyristor) ausgebildet ist. Nach Fig. 9 ist bei dem jeweiligen Tiefsetzsteller 7, 8 der ansteuerbare Leistungshalbleiterschalter 11a der ersten Serienschaltung 7a, 8a mit dem ersten Anschluss 5a, 5b des zugehörigen Gleichspannungskreises 4a, 4b und der ansteuerbare Leistungshalbleiterschalter 11b der zweiten Serienschaltung 7b, 8b mit dem zweiten Anschluss 6a, 6b des zugehörigen Gleichspannungskreises 4a, 4b verbunden. Weiterhin ist bei dem jeweiligen Tiefsetzsteller 7, 8 der Verbindungspunkt der Diode 12a der ersten Serienschaltung 7a, 8a mit dem ansteuerbaren Leistungshalbleiterschalter 11a der ersten Serienschaltung 7a, 8a durch eine erste Verbindung 14 mit der jeweils zugehörigen Gleichspannungsverschienung 9a, 9b verbunden, d.h. beim ersten Tiefsetzsteller 7 ist der Verbindungspunkt der Diode 12a der ersten Serienschaltung 7a mit dem ansteuerbaren Leistungshalbleiterschalter 11a der ersten Serienschaltung 7a durch die erste Verbindung 14 mit der ersten Gleichspannungsverschienung 9a verbunden und beim zweiten Tiefsetzsteller 8 ist der Verbindungspunkt der Diode 12a der ersten Serienschaltung 8a mit dem ansteuerbaren Leistungshalbleiterschalter 11a der ersten Serienschaltung 8a durch die erste Verbindung 14 mit der zweiten Gleichspannungsverschienung 9b verbunden. Darüber hinaus ist bei dem jeweiligen Tiefsetzsteller 7, 8 der Verbindungspunkt der Diode 12b der zweiten Serienschaltung 7b, 8b mit dem ansteuerbaren Leistungshalbleiterschafter 11b der zweiten Serienschaltung 7b, 8b durch eine zweite Verbindung 15 mit der jeweils zugehörigen Gleichspannungsverschienung 9a, 9b verbunden, d.h. beim ersten Tiefsetzsteller 7 ist der Verbindungspunkt der Diode 12b der zweiten Serienschaltung 7b mit dem ansteuerbaren Leistungshalbleiterschalter 11b der zweiten Serienschaltung 7b durch eine zweite Verbindung 15 mit der ersten Gleichspannungsverschienung 9a verbunden und beim zweiten Tiefsetzsteller 8 ist der Verbindungspunkt der Diode 12b der zweiten Serienschaltung 8b mit dem ansteuerbaren Leistungshalbleiterschalter 11b der zweiten Serienschaltung 8b durch eine zweite Verbindung 15 mit der zweiten Gleichspannungsverschienung 9b verbunden. Durch die vorstehend beschriebene Ausführung des ersten und zweiten Tiefsetzstellers 7, 8 kann eine höhere Spannung des jeweiligen Gleichspannungskreises 4a, 4b im Vergleich zu der Ausführungsform des ersten und zweiten Tiefsetzstellers 7, 8 nach Fig. 7 und Fig. 8 geschaltet werden, da sich diese Spannung auf die zwei Kapazitäten 13 des jeweiligen Tiefsetzstellers 7, 8 aufteilt. Wird hingegen eine vergleichbare Spannung des jeweiligen Gleichspannungskreises 4a, 4b wie bei der Ausführungsform des ersten und zweiten Tiefsetzstellers 7, 8 nach Fig. 7 und Fig. 8 gewählt, so können aufgrund der Aufteilung dieser Spannung auf die zwei Kapazitäten 13 des jeweiligen Tiefsetzstellers 7, 8 für die zugehörigen ansteuerbaren Leistungshalbleiterschalter 11a, 11b und Dioden 12a, 12b preisgünstige Niederspannungshalbleiter verwendet werden, welche mit einer hohen Schaltfrequenz betreibbar sind. Derart ausgebildete Tiefsetzsteller 7, 8 erzeugen vorteilhaft weniger unerwünschte Spannungsschwingungen und Stromschwingungen und verursachen damit weniger EMV-Probleme. Weiterhin weisen derart ausgebildete Tiefsetzsteller 7, 8 nur minimale Leit- und Schaltverluste auf, so dass sich die Tiefsetzsteller 7, 8 besonders effizient betreiben lassen. Der jeweiligen Tiefsetzsteller 7, 8 gemäss Fig. 9 kommt zudem mit einer minimalen Anzahl an Bauelementen aus und ist damit sehr einfach und platzsparend realisierbar. Durch die geringe Anzahl an Bauelementen ist der erste und zweite Tiefsetzsteller 7, 8 besonders robust und störungsunempfindlich und weist demnach eine hohe Verfügbarkeit auf.

Gemäss Fig. 9 ist bei dem jeweiligen Tiefsetzsteller 7, 8 zwischen der ersten Verbindung 14 und der jeweils zugehörigen Gleichspannungsverschienung 9a, 9b und zwischen der zweiten Verbindung 15 und der jeweils zugehörigen Gleichspannungsverschienung 9a, 9b eine Filterschaltung 16 angeschlossen. Die Filterschaltung 16 bewirkt vorteilhaft, dass durch Schalthandlungen des jeweiligen Tiefsetzstellers 7, 8 erzeugte unerwünschte Spannungsschwingungen und Stromschwingungen ausgefiltert werden, so dass die Spannung der ersten und zweiten Gleichspannungsverschienung 9a, 9b, d.h. die zwischen den Verschienungssträngen der ersten und zweiten Gleichspannungsverschienung 9a, 9b anliegende Spannung, nahezu eine Gleichspannung ist.

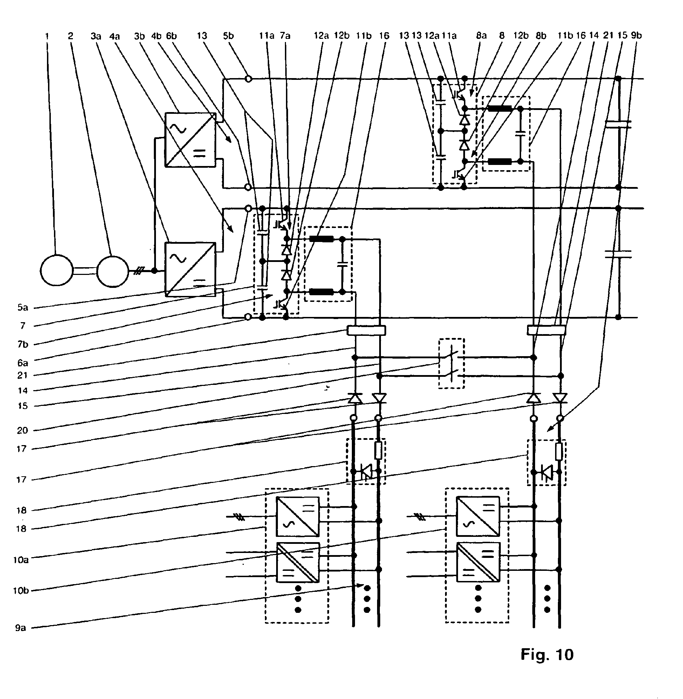

In einer zehnten Ausführungsform der Vorrichtung gemäss Fig. 10 ist im Unterschied zur neunten Ausführungsform nach Fig. 9 bei dem jeweiligen Tiefsetzsteller 7, 8 in die erste Verbindung 14 und in die zweite Verbindung 15 jeweils ein Stromrichtungsbegrenzungselement 17 eingeschaltet. Das jeweilige Stromrichtungsbegrenzungselement 17 dient dazu, dass nur ein Strom in definierter Stromrichtung vom jeweiligen Tiefsetzsteller 7, 8 zur zugehörigen Gleichspannungsverschienung 9a, 9b und definiert wieder zurück fliesst. Dadurch wird vorteilhaft vermieden, dass ein Fehlerstrom, beispielsweise hervorgerufen durch einen Fehler der jeweiligen Gleichspannungsverschienung 9a, 9b und/oder einen Fehler in einer oder in mehreren Hilfsbetriebeeinrichtungen 10a, 10b, zurück zum jeweiligen Tiefsetzsteller 7, 8 fliessen kann und den jeweilige Tiefsetzsteller 7, 8 beschädigt oder gar zerstört. Das jeweilige Stromrichtungsbegrenzungselement 17 ist gemäss Fig. 10 vorzugsweise als Diode ausgebildet und somit vorteilhaft sehr einfach und platzsparend realisierbar.

Bei sämtlichen Ausführungsformen der Vorrichtung nach Fig. 7, Fig. 8, Fig. 9 und Fig. 10 weist die erste und die zweite Gleichspannungsverschienung 9a, 9b jeweils ein Überspannungsbegrenzungsnetzwerk 18 auf. Das Überspannungsbegrenzungsnetzwerk 18 ist durch einen Widerstand und einen ansteuerbaren Schalter, vorzugsweise ein ansteuerbarer Leistungshalbleiterschalter gebildet, wobei das Überspannungsbegrenzungsnetzwerk 18 durch Schliessen des Schalters bei einer auftretenden Überspannung der Spannung der jeweiligen Gleichspannungsverschienung 9a, 9b betätigt wird. Vorteilhaft wird bei der Betätigung des Schalters Energie der jeweiligen Gleichspannungsverschienung 9a, 9b in Wärme im Widerstand umgesetzt und somit die Spannung der Gleichspannungsverschienung 9a, 9b einfach, schnell und effektiv verringert. Vorzugsweise erfolgt die Betätigung des Überspannungsbegrenzungsnetzwerks 18 für eine vorgegebene Zeitdauer. Diese Zeitdauer wird vorzugsweise in Abhängigkeit der thermischen Kapazität des Widerstandes vorgegeben. Die Betätigung erfolgt nach für den Fachmann bekannten Kriterien, auf die an dieser Stelle nicht näher eingegangen wird.

Darüber hinaus ist bei sämtlichen Ausführungsformen der Vorrichtung nach Fig. 7, Fig. 8, Fig. 9 und Fig. 10 ein Verbindungselement 20 zwischen der ersten Verbindung 14 bezüglich der ersten Gleichspannungsverschienung 9a und der ersten Verbindung 14 bezüglich der zweiten Gleichspannungsverschienung 9b und zwischen der zweiten Verbindung 15 bezüglich der ersten Gleichspannungsverschienung 9a und der zweiten Verbindung 15 bezüglich der zweiten Gleichspannungsverschienung 9b eingeschaltet. Im Normalbetrieb der Vorrichtung ist das Verbindungselement 20 offen, d.h. die erste Verbindung 14 bezüglich der ersten Gleichspannungsverschienung 9a und die erste Verbindung 14 bezüglich der zweiten Gleichspannungsverschienung 9b sind nicht miteinander verbunden und die zweite Verbindung 15 bezüglich der ersten Gleichspannungsverschienung 9a und die zweite Verbindung 15 bezüglich der zweiten Gleichspannungsverschienung 9b sind ebenfalls nicht miteinander verbunden. Bei einer Störung oder einem Ausfall beispielsweise des ersten Tiefsetzstellers 7 wird das Verbindungselement 20 geschlossen, d.h. die erste Verbindung 14 bezüglich der ersten Gleichspannungsverschienung 9a und die erste Verbindung 14 bezüglich der zweiten Gleichspannungsverschienung 9b sind dann miteinander verbunden und die zweite Verbindung 15 bezüglich der ersten Gleichspannungsverschienung 9a und die zweite Verbindung 15 bezüglich der zweiten Gleichspannungsverschienung 9b sind dann auch miteinander verbunden. Die Speisung der ersten Gleichspannungsverschienung 9a erfolgt somit vorteilhaft über den zweiten Tiefsetzsteller 8, so dass die ersten Hilfsbetriebeeinrichtungen 10 über ihre Wechselrichter und/oder Gleichspannungsteller weiter gespeist werden können. Eine solche mögliche redundante Speisung der jeweiligen Gleichspannungsverschienung 9a, 9b bewirkt eine weitere Verbesserung der Robustheit und Störungsunempfindlichkeit, wobei zudem die Verfügbarkeit weiter erhöht werden kann. Das Verbindungselement 20 ist vorzugsweise als niederinduktiver Schalter, beispielsweise als mechanischer oder als ansteuerbarer Leistungshalbleiterschalter, ausgeführt. Zur Abtrennung des gestörten oder ausgefallenen Tiefsetzstellers 7, 8 ist bei sämtlichen Ausführungsformen der Vorrichtung nach Fig. 7, Fig. 8, Fig. 9 und Fig. 10 bei dem jeweiligen Tiefsetzsteller 7, 8 in die erste und zweite Verbindung 14, 15 ein Trennelement 21 eingeschaltet ist. Dadurch wird vorteilhaft sichergestellt, dass der gestörte oder ausgefallene Tiefsetzsteller 7, 8 die zugehörige erste und zweite Verbindung 14, 15 beispielsweise nicht kurzschliesst. Das Trennelement 21 ist vorzugsweise als niederinduktiver Schalter, beispielsweise als mechanischer oder als ansteuerbarer Leistungshalbleiterschalter, oder als Sicherung ausgeführt.

### Bezugszeichenliste

- 1: Brennkraftmaschine
- 2: Generator
- 3: Gleichrichter
- 3a: erster Gleichrichter
- 3b: zweiter Gleichrichter
- 4: Gleichspannungskreis
- 4a: erster Gleichspannungskreis
- 4b: zweiter Gleichspannungskreis
- 5: erster Anschluss des Gleichspannungskreises
- 5a: erster Anschluss des ersten Gleichspannungskreises
- 5b: erster Anschluss des zweiten Gleichspannungskreises
- 6: zweiter Anschluss des Gleichspannungskreises
- 6a: zweiter Anschluss des ersten Gleichspannungskreises
- 6b: zweiter Anschluss des zweiten Gleichspannungskreises
- 7: erster Tiefsetzsteller
- 7a: erste Serienschaltung des ersten Tiefsetzstellers
- 7b: zweite Serienschaltung des ersten Tiefsetzstellers
- 8: zweiter Tiefsetzsteller
- 8a: erste Serienschaltung des zweiten Tiefsetzstellers
- 8b: zweite Serienschaltung des zweiten Tiefsetzstellers
- 9a: erste Gleichspannungsverschienung
- 9b: zweite Gleichspannungsverschienung
- 10a: erste Hilfsbetriebeeinrichtungen
- 10b: zweite Hilfsbetriebeeinrichtungen
- 11: ansteuerbarer Leistungshalbleiterschalter
- 11a: ansteuerbarer Leistungshalbleiterschalter der ersten Serienschaltung des ers- ten und zweiten Tiefsetzstellers
- 11b: ansteuerbarer Leistungshalbleiterschalter der zweiten Serienschaltung des ersten und zweiten Tiefsetzstellers
- 12: Diode
- 12a: Diode der ersten Serienschaltung des ersten und zweiten Tiefsetzstellers
- 12b: Diode der zweiten Serienschaltung des ersten und zweiten Tiefsetzstellers
- 13: Kapazität
- 14: erste Verbindung
- 15: zweite Verbindung
- 16: Filterschaltung
- 17: Stromrichtungsbegrenzungselement
- 18: Überspannungsbegrenzungsnetzwerks
- 19: Kapazität des ersten Spannungsanstiegsbegrenzungsnetzwerks
- 20: Verbindungselement
- 21: Trennelement
- 22: weiterer Gleichrichter

## Patentansprüche

1. Vorrichtung zur Speisung von Hilfsbetriebeeinrichtungen für ein kraftstoffelektrisch angetriebenes Fahrzeug mit einer Brennkraftmaschine (1), mit einem von der Brennkraftmaschine (1) angetriebenen einzigen Generator (2), mit einem wechselspannungsseitig mit dem Generator (2) verbundenen und dem Generator (2) zugeordneten einzigen Gleichrichter (3), wobei der Gleichrichter (3) gleichspannungsseitig mit einem ersten und einem zweiten Anschluss (5, 6) eines dem Gleichrichter (3) zugeordneten und dem Gleichrichter (3) nachgeschalteten einzigen Gleichspannungskreises (4) verbunden ist, **dadurch gekennzeichnet,**
**dass** ein erster und ein zweiter Tiefsetzsteller (7, 8) jeweils mit dem ersten und zweiten Anschluss (5, 6) des Gleichspannungskreises (4) verbunden ist, und
**dass** der erste Tiefsetzsteller (7) mit einer dem ersten Tiefsetzsteller (7) zugeordneten und dem ersten Tiefsetzsteller (7) nachgeschalteten ersten Gleichspannungsverschienung (9a) zur Speisung erster Hilfsbetriebeeinrichtungen (10a) und der zweite Tiefsetzsteller (8) mit einer dem zweiten Tiefsetzsteller (8) zugeordneten und dem zweiten Tiefsetzsteller (8) nachgeschalteten zweiten Gleichspannungsverschienung (9b) zur Speisung zweiter Hilfsbetriebeeinrichtungen (10b) verbunden ist.

2. Vorrichtung zur Speisung von Hilfsbetriebeeinrichtungen für ein kraftstoffelektrisch angetriebenes Fahrzeug mit einer Brennkraftmaschine (1), mit einem von der Brennkraftmaschine (1) angetriebenen einzigen Generator (2), mit einem wechselspannungsseitig mit dem Generator (2) verbundenen und dem Generator (2) zugeordneten Gleichrichter (3), wobei der Gleichrichter (3) gleichspannungsseitig mit einem ersten und einem zweiten Anschluss (5, 6) eines dem Gleichrichter (3) zugeordneten und dem Gleichrichter (3) nachgeschalteten Gleichspannungskreises (4) verbunden ist, **dadurch gekennzeichnet, dass** ein erster Tiefsetzsteller (7) mit dem ersten und zweiten Anschluss (5, 6) des Gleichspannungskreises (4) verbunden ist, und
dass der erste Tiefsetzsteller (7) mit einer dem ersten Tiefsetzsteller (7) zugeordneten und dem ersten Tiefsetzsteller (7) nachgeschalteten ersten Gleichspannungsverschienung (9a) zur Speisung erster Hilfsbetriebeeinrichtungen (10a) und ein weiterer wechselspannungsseitig mit dem Generator (2) verbundener und dem Generator (2) zugeordneter Gleichrichter (22) mit einer dem weiteren Gleichrichter (22) zugeordneten und dem weiteren Gleichrichter (22) nachgeschalteten zweiten Gleichspannungsverschienung (9b) zur Speisung zweiter Hilfsbetriebeeinrichtungen (10b) verbunden ist.

3. Vorrichtung nach Anspruch 2, **dadurch gekennzeichnet, dass** der weitere Gleichrichter (22) durch eine erste Verbindung (14) und durch eine zweite Verbindung (15) mit der zweiten Gleichspannungsverschienung (9b) verbunden ist.

4. Vorrichtung nach einem der Ansprüche 1 bis 3, **dadurch gekennzeichnet, dass** der jeweilige Tiefsetzsteller (7, 8) durch eine Serienschaltung eines ansteuerbaren Leistungshalbleiterschalters (11) mit einer Diode (12) und durch eine parallel zu der Serienschaltung des ansteuerbaren Leistungshalbleiterschalters (11) mit der Diode (12) geschaltete Kapazität (13) gebildet ist.

5. Vorrichtung nach Anspruch 4, **dadurch gekennzeichnet, dass** bei dem jeweiligen Tiefsetzsteller (7, 8) der ansteuerbare Leistungshalbleiterschalter (11) mit dem ersten Anschluss (5) des Gleichspannungskreises (4) und die Diode (12) mit dem zweiten Anschluss (6) des Gleichspannungskreises (4) verbunden ist, und
dass bei dem jeweiligen Tiefsetzsteller (7, 8) die Diode (12) durch eine erste Verbindung (14) und der Verbindungspunkt der Diode (12) mit dem ansteuerbaren Leistungshalbleiterschalter (11) durch eine zweite Verbindung (15) mit der jeweils zugehörigen Gleichspannungsverschienung (9a, 9b) verbunden ist.

6. Vorrichtung nach Anspruch 5, **dadurch gekennzeichnet, dass** bei dem jeweiligen Tiefsetzsteller (7, 8) zwischen der ersten Verbindung (14) und der jeweils zugehörigen Gleichspannungsverschienung (9a, 9b) und an die zweite Verbindung (15) eine Filterschaltung (16) angeschlossen ist.

7. Vorrichtung nach einem der Ansprüche 1 bis 3, **dadurch gekennzeichnet, dass** der jeweilige Tiefsetzsteller (7, 8) durch eine erste und eine zweite Serienschaltung (7a, 7b, 8a, 8b) jeweils eines ansteuerbaren Leistungshalbleiterschalters (11a, 11b) mit einer Diode (12a, 12b) und durch jeweils eine parallel zu jeder Serienschaltung geschaltete Kapazität (13) gebildet ist, wobei die Diode (12a) der ersten Serienschaltung (7a, 8a) mit der Diode (12b) der zweiten Serienschaltung (7b, 8b) verbunden ist.

8. Vorrichtung nach Anspruch 7, **dadurch gekennzeichnet, dass** bei dem jeweiligen Tiefsetzsteller (7, 8) der ansteuerbare Leistungshalbleiterschalter (11a) der ersten Serienschaltung (7a, 8a) mit dem ersten Anschluss (5) des Gleichspannungskreises (4) und der ansteuerbare Leistungshalbleiterschalter (11b) der zweiten Serienschaltung (7b, 8b) mit dem zweiten Anschluss (6) des Gleichspannungskreises (4) verbunden ist,
dass bei dem jeweiligen Tiefsetzsteller (7, 8) der Verbindungspunkt der Diode (12a) der ersten Serienschaltung (7a, 8a) mit dem ansteuerbaren Leistungshalbleiterschalter (11a) der ersten Serienschaltung (7a, 8a) durch eine erste Verbindung (14) mit der jeweils zugehörigen Gleichspannungsverschienung (9a, 9b) verbunden ist, und dass bei dem jeweiligen Tiefsetzsteller (7, 8) der Verbindungspunkt der Diode (12b) der zweiten Serienschaltung (7b, 8b) mit dem ansteuerbaren Leistungshalbleiterschalter (11b) der zweiten Serienschaltung (7b, 8b) durch eine zweite Verbindung (15) mit der jeweils zugehörigen Gleichspannungsverschienung (9a, 9b) verbunden ist.

9. Vorrichtung nach Anspruch 8, **dadurch gekennzeichnet, dass** bei dem jeweiligen Tiefsetzsteller (7, 8) zwischen der ersten Verbindung (14) und der jeweils zugehörigen Gleichspannungsverschienung (9a, 9b) und zwischen der zweiten Verbindung (15) und der jeweils zugehörigen Gleichspannungsverschienung (9a, 9b) eine Filterschaltung (16) angeschlossen ist.

10. Vorrichtung nach einem der Ansprüche 5, 6, 8 oder 9, **dadurch gekennzeichnet, dass** bei dem jeweiligen Tiefsetzsteller (7, 8) in die erste Verbindung (14) und in die zweite Verbindung (15) jeweils ein Stromrichtungsbegrenzungselement (17) eingeschaltet ist.

11. Vorrichtung nach einem der Ansprüche 3, 5, 6, 8, 9 oder 10, **dadurch gekennzeichnet, dass** ein Verbindungselement (20) zwischen der ersten Verbindung (14) bezüglich der ersten Gleichspannungsverschienung (9a) und der ersten Verbindung (14) bezüglich der zweiten Gleichspannungsverschienung (9b) und zwischen der zweiten Verbindung (15) bezüglich der ersten Gleichspannungsverschienung (9a) und der zweiten Verbindung (15) bezüglich der zweiten Gleichspannungsverschienung (9b) eingeschaltet ist.

12. Vorrichtung nach Anspruch 11, **dadurch gekennzeichnet, dass** bei dem jeweiligen Tiefsetzsteller (7, 8) in die erste und zweite Verbindung (14, 15) ein Trennelement (21) eingeschaltet ist.

13. Vorrichtung nach Anspruch 3, **dadurch gekennzeichnet, dass** bei dem weiteren Gleichrichter (22) in die erste Verbindung (14) und in die zweite Verbindung (15) jeweils ein Stromrichtungsbegrenzungselement (17) eingeschaltet ist.

14. Vorrichtung nach Anspruch 3 oder 13, **dadurch gekennzeichnet, dass** bei dem weiteren Gleichrichter (22) in die erste und zweite Verbindung (14, 15) ein Trennelement (21) eingeschaltet ist.

15. Vorrichtung nach einem der vorhergehenden Ansprüche, **dadurch gekennzeichnet, dass** die erste und zweite Gleichspannungsverschienung (9a, 9b) jeweils ein Überspannungsbegrenzungsnetzwerk (18) aufweist.

## Claims

1. Device for feeding auxiliary operating devices for a fuel/electric vehicle having an internal combustion engine (1), having a single generator (2) which is driven by the internal combustion engine (1), having a single rectifier (3) which is connected on the alternating voltage side to the generator (2) and is assigned to the generator (2), wherein the rectifier (3) is connected on the direct voltage side to a first and a second terminal (5, 6) of a single direct voltage circuit (4) which is assigned to the rectifier (3) and is connected downstream of the rectifier (3), **characterized**
**in that** a first and a second step-down converter (7, 8) are respectively connected to the first and second terminals (5, 6) of the direct voltage circuit (4), and in that the first step-down converter (7) is connected to a first direct voltage rail (9a), which is assigned to the first step-down converter (7) and is connected downstream of the first step-down converter (7) and has the purpose of feeding first auxiliary operating devices (10a), and the second step-down converter (8) is connected to a second direct voltage rail (9b), which is assigned to the second step-down converter (8) and is connected downstream of the second step-down converter (8) and has the purpose of feeding second auxiliary operating devices (10b).

2. Device for feeding auxiliary operating devices for a fuel/electric vehicle having an internal combustion engine (1), having a single generator (2) which is driven by the internal combustion engine (1), having a rectifier (3) which is connected on the alternating voltage side to the generator (2) and is assigned to the generator (2), wherein the rectifier (3) is connected on the direct voltage side to a first and a second terminal (5, 6) of a direct voltage circuit (4) which is assigned to the rectifier (3) and is connected downstream of the rectifier (3), **characterized**
**in that** a first step-down converter (7) is connected to the first and second terminals (5, 6) of the direct voltage circuit (4), and
**in that** the first step-down converter (7) is connected to a first direct voltage rail (9a) which is assigned to the first step-down converter (7) and is connected downstream of the first step-down converter (7) and has the purpose of feeding first auxiliary operating devices (10a), and a further rectifier (22) which is connected on the alternating voltage side to the generator (2) and is assigned to the generator (2) is connected to a second direct voltage rail (9b) which is assigned to the further rectifier (22) and is connected downstream of the further rectifier (22) and has the purpose of feeding second auxiliary operating devices (10b).

3. Device according to Claim 2, **characterized in that** the further rectifier (22) is connected to the first rectifier rail (9b) by means of a first connection (14) and by means of a second conenction (15).

4. Device according to one of Claims 1 to 3, **characterized in that** the respective step-down converter (7, 8) is formed by a series circuit of a controllable power semiconductor switch (11) with a diode (12), and by a capacitor (13) which is connected to the diode (12) parallel to the series circuit of the controllable power semiconductor switch (11).

5. Device according to Claim 4, **characterized in that** at the respective step-down converter (7, 8), the controllable power semiconductor switch (11) is connected to the first terminal (5) of the direct voltage circuit (4), and the diode (12) is connected to the second terminal (6) of the direct voltage circuit (4), and
**in that** at the respective step-down converter (7, 8), the diode (12) is connected by means of a first connection (14) and the connecting point of the diode (12) to the controllable power semiconductor switch (11) is connected, by means of a second connection (15), to the respectively associated direct voltage rail (9a, 9b).

6. Device according to Claim 5, **characterized in that** at the respective step-down converter (7, 8) a filter circuit (16) is connected between the first connection (14) and the respectively associated direct voltage rail (9a, 9b) and to the second connection (15).

7. Device according to one of Claims 1 to 3, **characterized in that** the respective step-down converter (7, 8) is formed by a first and a second series circuit (7a, 7b, 8a, 8b) of a respective controllable power semiconductor switch (11a, 11b) with a diode (12a, 12b), and by means of a respective capacitor (13) which is connected parallel to each series circuit, wherein the diode (12a) of the first series circuit (7a, 8a) is connected to the diode (12b) of the second series circuit (7b, 8b).

8. Device according to Claim 7, **characterized in that** at the respective step-down converter (7, 8) the controllable power semiconductor switch (11a) of the first series circuit (7a, 8a) is connected to the first terminal (5) of the direct voltage circuit (4), and the controllable power semiconductor switch (11b) of the second series circuit (7b, 8b) is connected to the second terminal (6) of the direct voltage circuit (4),
**in that** at the respective step-down converter (7, 8) the connecting point of the diode (12a) of the first series circuit (7a, 8a) is connected to the controllable power semiconductor switch (11a) of the first series circuit (7a, 8a) by means of a first connection (14) to the respectively associated direct voltage rail (9a, 9b), and
**in that** at the respective step-down converter (7, 8) the connecting point of the diode (12b) of the second series circuit (7b, 8b) to the controllable power semiconductor switch (11b) of the second series circuit (7b, 8b) is connected by means of a second connection (15) to the respectively associated direct voltage rail (9a, 9b).

9. Device according to Claim 8, **characterized in that** at the respective step-down converter (7, 8) a filter circuit (16) is connected between the first connection (14) and the respectively associated direct voltage rail (9a, 9b) and between the second connection (15) and the respectively associated direct voltage rail (9a, 9b).

10. Device according to one of Claims 5, 6, 8 or 9, **characterized in that** at the respective step-down converter (7, 8) a current-direction-limiting element (17) is connected into the first connection (14) and a current-direction-limiting element (17) is connected into the second connection (15).

11. Device according to one of Claims 3, 5, 6, 8, 9 or 10, **characterized in that** a connecting element (20) is connected between the first connection (14) for the first direct voltage rail (9a) and the first connection (14) for the second direct voltage rail (9b), and between the second connection (15) for the first direct voltage rail (9a) and the second connection (15) for the second direct voltage rail (9b).

12. Device according to Claim 11, **characterized in that** at the respective step-down converter (7, 8) a disconnecting element (21) is connected into the first and second connections (14, 15).

13. Device according to Claim 3, **characterized in that** at the further rectifier (22) a current-direction-limiting element (17) is connected into the first connection (14), and a current-direction-limiting element (17) is connected into the second connection (15).

14. Device according to Claim 3 or 13, **characterized in that** at the further rectifier (22) a disconnecting element (21) is connected into the first and second connections (14, 15).

15. Device according to one of the preceding claims, **characterized in that** the first and second direct voltage rails (9a, 9b) each have an over voltage-limiting network (18).

## Revendications

1. Dispositif d'alimentation de systèmes auxiliaires d'un véhicule à motorisation par carburant et par électricité, qui présente un moteur à combustion interne (1), un unique générateur (2) entraîné par le moteur à combustion interne (1), un unique redresseur (3) associé au générateur (2) et relié par son côté tension alternative du générateur (2), le côté tension continue du redresseur (3) étant relié à une première et une deuxième borne de raccordement (5, 6) d'un unique circuit (4) sous tension continue associé au redresseur (3) et raccordé en aval du redresseur (3),
**caractérisé en ce que**
un premier et un deuxième abaisseur de tension (7, 8) sont reliés respectivement à la première et à la deuxième borne de raccordement (5, 6) du circuit (4) sous tension continue,
**en ce que** le premier abaisseur de tension (7) est relié à un premier rail collecteur (9a) sous tension continue associé au premier abaisseur de tension (7) et raccordé en aval du premier abaisseur de tension (7) pour alimenter des premiers systèmes auxiliaires (10a) et
**en ce que** le deuxième abaisseur de tension (8) est raccordé à un deuxième rail collecteur (9b) sous tension continue associé au deuxième abaisseur de tension (8) et raccordé en aval du deuxième abaisseur de tension (8) pour alimenter des deuxièmes systèmes auxiliaires (10b).

2. Dispositif d'alimentation de systèmes auxiliaires dans un véhicule à motorisation par carburant et par électricité qui présente un moteur à combustion interne (1), un unique générateur (2) entraîné par le moteur à combustion interne (1), un redresseur (3) associé au générateur (2) et relié par son côté tension alternative au générateur (2), le côté tension continue du redresseur (3) étant relié à une première et à une deuxième borne de raccordement (5, 6) d'un circuit (4) sous tension continue associé au redresseur (3) et raccordé en aval du redresseur (3),
**caractérisé en ce que**
un premier abaisseur de tension (7) est relié à la première et à la deuxième borne de raccordement (5, 6) du circuit (4) sous tension continue,
**en ce que** le premier abaisseur de tension (7) est relié à un premier rail collecteur (9a) sous tension continue associé au premier abaisseur de tension (7) et raccordé en aval du premier abaisseur de tension (7) pour alimenter des premiers systèmes auxiliaires (10a) et
**en ce qu'**un autre redresseur (22) associé au générateur (2) et relié au générateur (2) par son côté tension alternative est relié à un deuxième rail collecteur (9b) sous tension continue associé à l'autre redresseur (22) et raccordé en aval du deuxième redresseur (22) pour alimenter des deuxièmes systèmes auxiliaires (10b).

3. Dispositif selon la revendication 2, **caractérisé en ce que** l'autre redresseur (22) est relié au deuxième rail collecteur (9b) sous tension continue par un premier raccordement (14) et par un deuxième raccordement (15).

4. Dispositif selon l'une des revendications 1 à 3, **caractérisé en ce que** chaque abaisseur de tension (7, 8) est formé par le raccordement en série d'un commutateur de puissance asservi (11) à semi-conducteur et d'une diode (12) et par une capacité (13) raccordée en parallèle au circuit série formé du commutateur de puissance asservi (11) à semi-conducteur et de la diode (12).

5. Dispositif selon la revendication 4, **caractérisé en ce que** dans chaque abaisseur de tension (7, 8), le commutateur de puissance asservi (11) à semi-conducteur est relié à la première borne de raccordement (5) du circuit (4) sous tension continue et la diode (12) est reliée à la deuxième borne de raccordement (6) du circuit (4) sous tension continue et **en ce que** dans chaque abaisseur de tension (7, 8), la diode (12) est reliée au rail collecteur (9a) sous tension continue par un premier raccordement (14) et le point de raccordement de la diode (12) au commutateur de puissance asservi (11) à semi-conducteur est relié au rail collecteur (9b) sous tension continue par un deuxième raccordement (15).

6. Dispositif selon la revendication 5, **caractérisé en ce que** dans chaque abaisseur de tension (7, 8), un circuit de filtrage (16) est raccordé au deuxième raccordement (15) entre le premier raccordement (14) et le rail collecteur (9a, 9b) sous tension continue respectif.

7. Dispositif selon l'une des revendications 1 à 3, **caractérisé en ce que** chaque abaisseur de tension (7, 8) est constitué d'un premier et d'un deuxième circuit série (7a, 7b, 8a, 8b) formé par un commutateur de puissance asservi (11a, 11b) à semi-conducteur respectif et d'une diode (12a, 12b) et par une capacité respective (13) raccordée en parallèle à chaque circuit série, la diode (12a) du premier circuit série (7a, 8a) étant reliée à la diode (12b) du deuxième circuit série (7b, 8b).

8. Dispositif selon la revendication 7, **caractérisé en ce que** dans chaque abaisseur de tension (7, 8), le commutateur de puissance asservi (11a) à semi-conducteur du premier circuit série (7a, 8a) est relié à la première borne de raccordement (5) du circuit (4) sous tension continue et le commutateur de puissance asservi (11b) à semi-conducteur du deuxième circuit série (7b, 8b) est raccordé à la deuxième borne de raccordement (6) du circuit (4) sous tension continue, **en ce que** dans chaque abaisseur de tension (7, 8), le point de raccordement de la diode (12a) du premier circuit série (7a, 8a) au commutateur de puissance asservi (11a) à semi-conducteur du premier circuit série (7a, 8a) est relié par un premier raccordement (14) au rail collecteur (9a, 9b) sous tension continue respectif et **en ce que** dans chaque abaisseur de courant (7, 8), le point de raccordement de la diode (12b) du deuxième circuit série (7b, 8b) est relié au commutateur de puissance asservi (11b) à semi-conducteur du deuxième circuit série (7b, 8b) par un deuxième raccordement (15) au rail collecteur (9a, 9b) sous tension continue respectif.

9. Dispositif selon la revendication 8, **caractérisé en ce que** dans chaque abaisseur de tension (7, 8), un circuit de filtrage (16) est raccordé respectivement entre le premier raccordement (14) et le rail collecteur (9a, 9b) sous tension continue et entre le deuxième raccordement (15) et le rail collecteur (9a, 9b) sous tension continue.

10. Dispositif selon l'une des revendications 5, 6, 8 ou 9, **caractérisé en ce que** dans chaque abaisseur de tension (7, 8), un élément (17) de limitation de la direction du courant est raccordé dans le premier raccordement (14) et dans le deuxième raccordement (15).

11. Dispositif selon l'une des revendications 3, 5, 6, 8, 9 ou 10, **caractérisé en ce qu'**un élément de raccordement (20) est raccordé entre le premier raccordement (14) du premier rail collecteur (9a) sous tension continue et le premier raccordement (14) au deuxième rail collecteur (9b) sous tension continue et entre le deuxième raccordement (15) au premier rail collecteur (9a) sous tension continue et le deuxième raccordement (15) au deuxième rail collecteur (9b) sous tension continue.

12. Dispositif selon la revendication 11, **caractérisé en ce que** dans chaque abaisseur de tension (7, 8), un élément de séparation (21) est raccordé dans le premier et le deuxième raccordement (14, 15).

13. Dispositif selon la revendication 3, **caractérisé en ce que** dans l'autre redresseur (22), un élément respectif (17) de limitation du sens du courant est raccordé dans le premier raccordement (14) et dans le deuxième raccordement (15).

14. Dispositif selon les revendications 3 ou 13, **caractérisé en ce que** dans l'autre redresseur (22), un élément de séparation (21) respectif est raccordé dans le premier et dans le deuxième raccordement (14, 15).

15. Dispositif selon l'une des revendications précédentes, **caractérisé en ce que** le premier et le deuxième rail collecteur (9a, 9b) sous tension continue présentent chacun un réseau (18) de limitation des surtensions.
